# EUROPEAN PATENT SPECIFICATION

(11) **EP 1 647 988 B1**
(45) Date of publication and mention of the grant of the patent: **25.09.2013**
(21) Application number: 05022255.3
(22) Date of filing: 12.10.2005
(51) Int. Cl.: G11B 20/18, G11B 20/12, G11B 27/00, G11B 7/0037, G11B 7/007, G11B 27/32

(54) **Method of replacement process and recording system**
Verfahren zum Ersetzen und Aufzeichnungssystem
Procédé de remplacement et système d'enregistrement

(30) Priority: 14.10.2004 JP 2004299529
(43) Date of publication of application: 19.04.2006
(73) Proprietor: Sony Corporation, Tokyo (JP)
(72) Inventor: Kuraoka, Tomotaka, Shinagawa-ku, Tokyo (JP); Kobayashi, Shoei, Shinagawa-ku, Tokyo (JP); Terada, Mitsutoshi, Shinagawa-ku, Tokyo (JP)
(74) Representative: Melzer, Wolfgang

(56) References cited:
- EP-A- 1 026 681
- EP-A- 1 239 478
- EP-A2- 1 288 945
- US-A1- 2004 062 160
- US-A1- 2004 136 292
- US-A1- 2004 158 768
- US-A1- 2004 179 445
- US-A1- 2004 193 946
- "DYNAMIC SPARE SECTOR ALLOCATION IN HARD DISK DRIVE" IBM TECHNICAL DISCLOSURE BULLETIN, IBM CORP. NEW YORK, US, vol. 38, no. 5, 1 May 1995 (1995-05-01), page 257, XP000519571 ISSN: 0018-8689

## Description

### CROSS REFERENCES TO RELATED APPLICATIONS

The present invention contains subject matter related to Japanese Patent Application JP 2004-299529 filed in the Japanese Patent Office on October 14, 2004.

### BACKGROUND OF THE INVENTION

### 1. Field of the Invention

The present invention relates to a method of performing a replacement process on a recording medium such as an optical disk, and also to a recording apparatus and a recording system.

### 2. Description of the Related Art

In the field of digital data recording/playback technology, it is known to record data on an optical disk (or a magnetooptical disk) such as CD (Compact Disk), MD (Mini-Disc), or DVD (Digital Versatile Disc). The "optical disk" is a generic name for recording media which are composed of a disk of a thin metal film protected by plastic and information recorded on which can be read by illuminating the disk with a laser beam and detecting changes in reflected light.

Optical disks can be classified into two groups: read-only optical disks such as CD, CD-ROM, and DVD-ROM; and writable optical disks capable of recording user data, such as MD, CD-R, CD-RW, DVD-R, DVD-RW, DVD+RW, and DVD-RAM. In writable optical disks, data is recorded by a magnet-optical recording method, a phase change recording method, or a dye film change recording method. The dye film change recording method is also called a write once recording method. This method allows it to write data once but does not allow rewriting. This method is suitable for simply storing data. The magneto-optical recording method and the phase change recording method both allow rewriting of data, and thus these two methods are widely used to record various kinds of data such as music data, video data, game programs, application programs, etc.

In recent years, a high density optical disk called Blu-ray Disc has been developed, and a great increase in storage capacity has been achieved.

In the high-density disk of this type, a data write/read process is performed using, for example, a combination of a laser with a wavelength of 405 nm (socalled a blue laser) and an objective lens with NA of 0.85. When the track pitch is 0.32 µm, the line density is 0.12 µm/bit, writing/reading is performed in units 64 Kbytes, and the format efficiency is about 82%, it is possible to write/read up to 23.3 Gbyte data on a disk with a diameter of 12 cm.

In such high-density disks, a write once type and a rewritable type have been developed.

In these writable recording media (not of the read only type), it is known to prepare a spare area and replace a data recording position on the disk using the spare area. More specifically, defect management is performed such that when a disk has a defect or the like causing some area to be unsuitable for recording data, data is recorded not in the defective area but in the spare area thereby allowing the data to be correctly recorded/read.

For example, Japanese Unexamined Patent Application Publication No. 6-338139 and U. S. Patent No. 6,782,488 disclose a defect management technique which is applied when a recording block on a rewritable optical disk is found to be defective.

In the known defect management technique, an area on a disk is reserved for use as a spare area, and, if a defective block (herein, the "block" refers to a physical area such as a sector or a cluster) is detected in a main data area for recording user data, data is recorded not in the detected defective block but in a block in the spare area.

In this technique, when the spare area becomes full, it is no more possible to perform a defective area replacement process. When a disk has no more sufficient space in the spare area available for defective area replacement, a disk drive (a write/read device) makes this disk write-inhibited such that no more data is allowed to be recorded.

If a sufficiently large area on a disk is assigned as a spare area, it is possible to prevent the disk from being made write-inhibited because of non-availability of a space in the spare area. However, the increase in the size of the spare area results in a reduction in the size (capacity) of the user data area. Besides, when the spare area has a large size, the spare area is not always fully used.

The optimum size of the spare area depends on an application on a host apparatus and a combination of a recording device and a medium, and thus the optimum size of the spare area cannot be determined uniquely. That is, in order to achieve a sufficiently high replacement capability, the spare area needs to be set to have a sufficiently large size.

However, the reserving a large area as the spare area makes it difficult to efficiently use the user data area.

A method of a replacement process in which all features of the precharacterizing part of claim 1 are disclosed, is described in EP-A-1 026 681.

### SUMMARY OF THE INVENTION

It is an object of the present invention to provide a method of a replacement process and a recording system that allow it to efficiently perform a recording process including a defect area replacement process without necessitating reserving a large area as a spare area.

This object is achieved by a method of a replacement process and a recording system according to the enclosed independent claims. Advantageous features of the present invention are defined in the corresponding subclaims.

In the embodiments of the present invention, the replacement function of the recording system capable of replacing a defective block or the like is extended as follows. When the recording operation is started, the replacement process by the recording apparatus is enabled. If an area having a defect or the like to be replaced is detected, the replacement process using the spare area is performed, and the replacement management information is recorded (updated). When the available space in the spare area becomes insufficient or if the spare area has no more available space, if an area having a defect or the like to be replaced is detected, the recording apparatus performs only the recording (updating) of the replacement manage information but does not perform the replacement using the spare area. Thereafter, the recording apparatus informs the host apparatus that the cluster specified by the address is defective, and requests the host apparatus to handle the defect.

The recording process performed by the host apparatus is extended as follows. If the host apparatus is informed via a write error message or the like that a defect is detected at the specified write address on the recording medium on which the replacement process is enabled, the host apparatus issues a data writing command to write the data in a specified area other than the area to be replaced. That is, in this case, it is determined that the defective cluster replacement has been disabled, and the host apparatus selects an address in another area and issues a command to write the data, which has failed to be written, at the selected address.

The embodiments of the present invention provide great advantages as described below. That is, in the recording apparatus, when an area having a defect or the like to be replaced is detected on a recording medium such as an optical disk, if the spare area has a sufficient available area, the replacement process using the spare area is performed, However, if the spare area does not have a sufficient available space, the replacement using the spare area is not performed although the replacement management information recorded in the management information area is updated to register the area to be replaced. In the latter case, the recording apparatus returns an error message to the application on the host apparatus and requests it to handle the error. In response, the host apparatus (application) selects another area other than the area to be replaced and issues a command to record the data in the selected area.

This processing method makes it possible to correctly handle a defective block or the like in recording of data even in a state in which the spare area on the recording medium has been fully used and the spare area has no more available space. That is, it becomes possible to record data without being restricted by the remaining available space in the spare area. Therefore, it becomes unnecessary to reserve a large area for use as the spare area, and thus it becomes possible to efficiently use the user data area.

In this processing method, when the remaining available space in the spare area becomes insufficient, the replacement using hardware by the recording apparatus is disabled, and the control of the recording area is transferred to the host apparatus. Thus, when the recording medium subjected to the replacement process according to one of embodiments of the invention is mounted on a usual recording/reading apparatus, it is possible to correctly read data from the recording medium in a usual manner without encountering any problem. That is, it is possible to eliminate the restriction by the insufficiency of the available space in the spare area while maintaining the compatibility in terms of reading, and it becomes possible to record data in a highly efficient manner.

### BRIEF DESCRIPTION OF THE DRAWINGS

Fig. 1 is a schematic diagram showing an example of an area structure of a disk according to an embodiment of the present invention;
Fig. 2 is a diagram showing an example of a management/control information area of a disk according to an embodiment of the present invention;
Fig. 3 is a diagram showing an example of a disk management area (DMA) of a disk according to an embodiment of the present invention;
Fig. 4 is a diagram showing an example of a disk definition structure (DDS) of a disk according to an embodiment of the present invention;
Figs. 5A to 5D show an example of a temporary disk management area (TDMA) of a disk according to an embodiment of the present invention;
Figs. 6A to 6C show examples of temporary disk management structure (TDMS) updating units according to an embodiment of the present invention;
Fig. 7 is a diagram showing an example of a manner in which information is additionally described in a TDMS updating unit according to an embodiment of the present invention;
Fig. 8 shows an example of a temporary disk definition structure (TDDS) of a disk according to an embodiment of the present invention;
Fig. 9 shows an example of a temporary defect list (TDFL) of a disk according to an embodiment of the present invention;
Figs. 10A and 10B show an example of a DFL entry of a disk according to an embodiment of the present invention;
Figs. 11A to 11C show examples of sequential recording ranges (SRRs) of a disk according to an embodiment of the present invention;
Fig. 12 shows an example of sequential recording range information (SRRI) of a disk according to an embodiment of the present invention;
Figs. 13A and 13B show an example of an SRRI header of a dick according to an embodiment of the present invention;
Fig. 14 shows an example of an SRR entry of a disk according to an embodiment of the present invention;
Fig. 15 shows an example of a format including an inner spare area (ISA) and an outer spare area (OSA) according to an embodiment of the present invention;
Fig. 16 is a block diagram showing a disk drive and a host apparatus according to an embodiment of the present invention;
Fig. 17 is a flow chart of a process performed by a disk drive when a defect occurs, according to an embodiment of the present invention; and
Fig. 18 is a flow chart of a process performed by a host apparatus when a defect occurs, according to an embodiment of the present invention.

### DESCRIPTION OF THE PREFERRED EMBODIMENTS

Embodiments of the present invention are described in terms of structures, operations, and parts listed below.
1. Disk Structure
2. DMA
3. TDMA
   3.1 TDMA Structure and TDMS Updating Unit
   3.2 TDDS
   3.3 TDFL
   3.4 SRR and SRRI
   3.5 Replacement Process Using Spare Area
4. Disk Drive and host apparatus
5. Replacement Process to Handle Defect
6. Advantages of Embodiments

### 1. Disk Structure

First, an optical disk used in a recording system according to an embodiment of the invention is described. When a high-density optical disk of the type called the Blu-ray disk is produced, the optical disk can be realized in the form of a write once type.

Examples of physical parameters of the high-density optical disk according to the present embodiment are described below. In the present embodiment, the disk diameter is set to 120 mm and the disk thickness is set to 1.2 mm. That is, in terms of the outer dimensions associated with the diameter and the thickness, the high-density optical disk according to the present embodiment is the same as a CD (Compact Disc) or a DVD (Digital Versatile Disc).

By using a so-called blue laser for use in the writing and reading process and using an optical system with a high NA (for example, NA = 0.85), and furthermore by forming the optical disk so as to have a small track pitch (for example, 0.32 µm) and have a high linear density (for example, 0.12 µm), it is possible to achieve as high a user data capacity as 23 Gbytes to 25 Gbytes on the disk with the diameter of 12 cm.

A disk of a two layer type having two layers as recording layers has also been developed. In the case of the two layer type, as high a user data capacity as 50 Gbytes can be achieved.

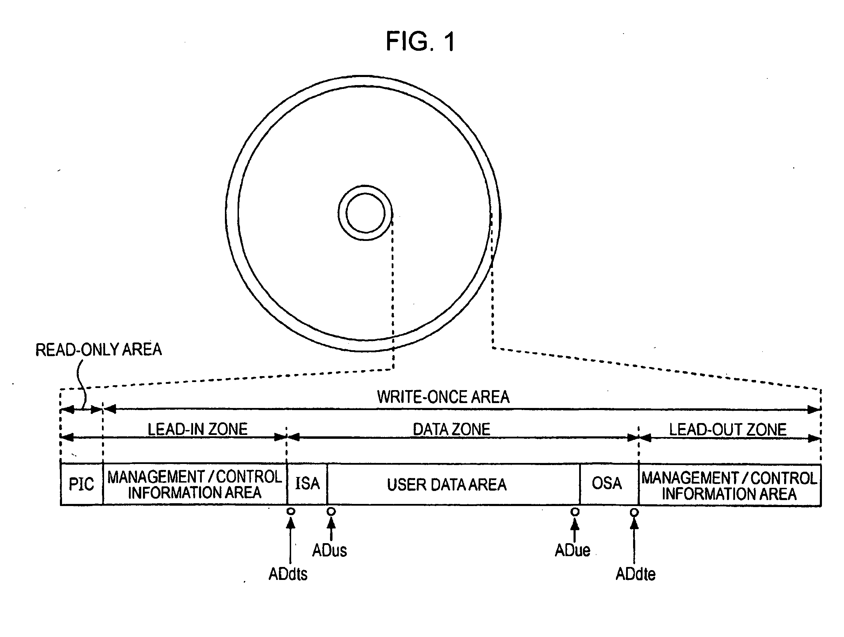

Fig. 1 shows a disk layout (area structure).

In the system according to the present embodiment, the layout shown in Fig. 1 is formed when the disk is formatted (initialized).

In the formatting process, a lead-in zone, a data zone, and a lead-out zone are formed, from the inner radius end to the outer radius end, on the disk.

In these zones, write/read areas are formed such that a pre-recoded information area PIC is produced in the form of a read-only area at the innermost position in the lead-in zone, and the remaining area of the disk is produced in the form of a write once area, wherein the remaining area of the lead-in zone is used to record management/control information the entire lead-out zone is used to record management/control information.

In the read-only area and the write once area, wobbling grooves serving as recording tracks are formed in a spiral fashion. More specifically, the grooves serve as tracking guides along which the tracks are traced by a laser spot and the grooves also serve as recording tracks along which data is recorded and read.

Although in the optical disk according to the present embodiment, data is assumed to be recorded in the grooves, it is not necessarily needed to record data in the grooves. For example, the optical disk may be of an on-land recording type in which data is recorded on lands between adjacent grooves. The optical disk may also be of a groove-land recording type in which data is recorded in grooves and on lands.

The grooves serving as the recording tracks are formed in a wobbling fashion corresponding to a wobble signal. In the disk drive, a groove is illuminated by a laser spot, and positions of both edges of the groove are detected from reflected light of the laser spot. While the laser spot is scanned along the recording track, variations in positions of both edges in the radial direction are extracted, and the wobble signal is reproduced from the variations in positions of both edges.

The wobble signal includes modulation signal indicating address information (physical address and other additional information) at recording positions along the recording tracks. By performing demodulation, the disk drive can extract the address information from the wobble signal, and the disk drive can record or read data according to the extracted address information.

The lead-in zone shown in Fig. 1 is formed, for example, in an inner area whose outer edge is at a radius of 24 mm.

In this lead-in zone, the pre-recorded information area PIC is formed in the innermost area extending from a radius of 22.2 to a radius of 23.1 mm.

In the pre-recorded information area PIC, read-only information is recorded in advance by means of wobbling of the grooves. The information recorded herein includes disk information such as a record/read power condition, information associated with areas of the disk, and information associated with copy protection. Alternatively, these kinds of information may be recorded by using embossed pits or the like.

Although not shown in Fig. 1, a burst cutting area (BCA) may be formed at a more inner position adjacent to the pre-recorded information area PIC. In the BCA, a unique ID of the disk serving as the recording medium is recorded by partially burning out the recording layer such that recording marks in a form similar to bar code are formed along concentric circles.

In the lead-in zone, for example, the management/control information area is formed in a radial range from 23.1 mm to 24 mm.

The management/control information area is formatted so as to include a control data area, a disc management area (DMA), a temporary disc management area (TDMA), a test write area (OPC), and a buffer area.

Management/control information recorded in the control data area in the management/control information area includes the disk type, the disk size, the disk version, the layer structure, the channel bit length, the BCA information, the transfer rate, the data zone position information, the recording linear velocity, and the write/read laser power information.

The test write area (OPC) formed in the management/control information area is used to perform test writing to determine data write/read conditions such as the write/read laser power. That is, this area is used to make adjustment associated with write/read conditions.

The DMA formed in the management/control information area is also called a defect management area in the field of the disk system technology, and is used to record replacement management information for defect management. Note that in the disk according to the present embodiment, the DMA is used not only to record replacement management information associated with defects but also to record management/control information necessary to rewrite data to achieve the write once disk according to the present embodiment. That is, the DMA is used not simply as the defect management area but as the disc management area.

To make it possible to rewrite data by means of the replacement, it is necessary to update the content of the DMA such that rewriting of data is reflected. To this end, the TDMA is used.

The replacement management information is recorded in the TDMA in an additionally recording fashion. When final replacement management information is recorded in the TDMA, the total information recorded in the TDMA is recorded in the DMA.

The DMA and the TDMA will be described in further detail later.

Outside the lead-in zone, the data zone is formed in an area extending from a radius of 24.0 mm to a radius of 58.0 mm. The data zone is used to write and read user data. The start address ADdts and the end address ADdte of the data zone are indicated by data zone position information recorded in the control data area.

In the format shown in Fig. 1, spare areas are formed in the data zone. More specifically, in this format, an inner spare area (ISA) is formed at the innermost position of the data zone, and an outer space area (OSA) is formed at the outermost position. These two areas, the ISA and the OSA, are used as the spare areas in the replacement process.

The ISA is formed so as to have a particular cluster size (one cluster = 65536 bytes) extending in an outer radial direction starting from the inner end of the data zone.

The OSA is formed so as to have a particular cluster size extending in an inner radial direction starting from the outer end of the data zone. The sizes of the ISA and the OSA are described in the DMA.

The area between the ISA and the OSA in the data zone is used as the user data area. That is, the user data area is a write/read area used to write and read user data.

The position of the user data area, that is, the start address ADus and the end address ADue are described in the DMA.

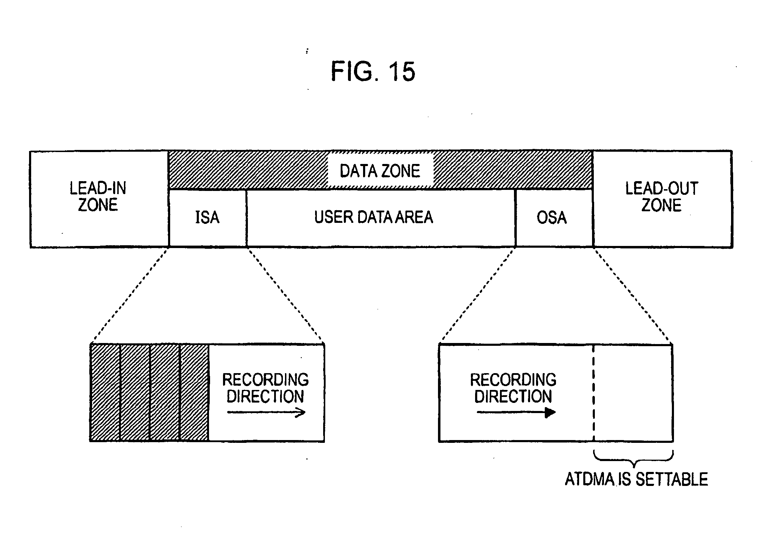

Although not shown in Fig. 1, an additional temporary disc management area (ATDMA) may be formed in the OSA, as will be described later with reference to Fig. 15. The ATDMA is formed in addition to the TDMA formed in the management/control information area such that when the TDMA is fully used to update the replacement management information, the ATDMA is used to record the following replacement management information.

Unlike the write once medium of the usual type that does not allow rewriting of data, the disk according to the present embodiment is capable of rewriting data by performing replacement. That is, rewriting of data recorded in a block (of a cluster) can be achieved by writing new data in another block and the old and new blocks are described as replacement management information and managed in a similar manner to defective block replacement, thereby achieving logical overwriting. Although in the present embodiment, when replacement for rewriting is performed, blocks in the user data area are used as spare blocks, blocks in the ISA or the OSA may also be used for this purpose.

The formatting of the disk may be performed such that the ISA and the OSA are not formed. When the formatting of the disk is performed such that the ISA and the OSA are not formed, the resultant disk does not have the capability of handling defects by replacement.

One of features of the present embodiment is that the replacement process is performed using the ISA and the OSA as the spare areas for the disk that has been formatted as shown in Fig. 1 in the initial formatting process. However, for a disk formatted such that the ISA and the OSA are not formed, the operation according to the present embodiment described herein is not performed.

In other words, the disk drive 10, which will be described later, initializes a disk used as a recording medium such that an ISA and an OSA are formed thereby making it possible to perform the replacement process using the spare areas (the ISA and the OSA) for this disk.

Outside the data zone, as shown in Fig. 1, the lead-out zone is formed in an area extending from a radius of 58.0 mm to a radius of 58.5 mm. This lead-out zone is used as a management/control information area in which a control data area, a DMA, and a buffer area are formed in the initialization process. In the control data area, as in the control data area in the lead-in zone, various kinds of management/control information are recorded. In the DMA, as in the DMA in the lead-in zone, control information associated with the ISA or the OSA is recorded.

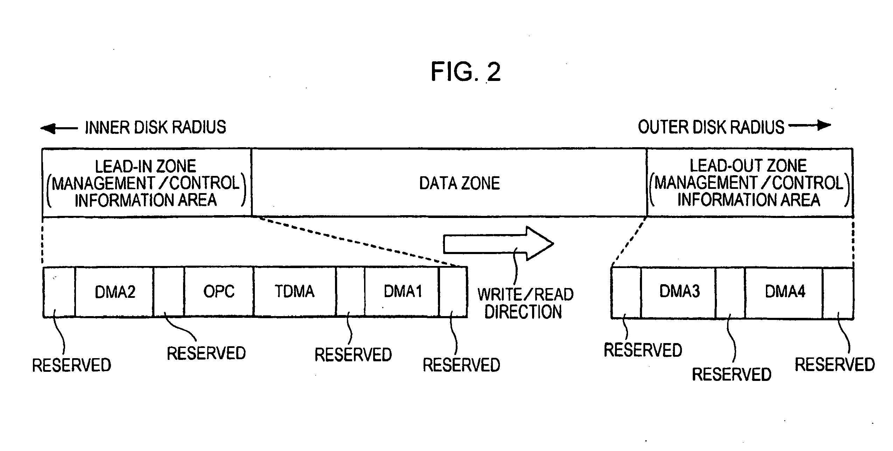

Fig. 2 shows an example of a structure of the management/control information area.

In the lead-in zone, as shown in Fig. 2, DMA2, OPC (test write area), TDMA and DMA1 are formed and remaining areas are reserved (undefined). In the lead-out zone, DMA3 and DMA4 are formed and remaining areas are reserved (undefined).

Although the control data area is not shown in Fig. 2, a part of the control data area is used as the DMA, whose structure is a main concern in the present invention.

As described above, a total of four DMA's are formed in the lead-in zone and the lead-out zone. In each of DMA1 to DMA4, the same replacement management information is recorded.

However, during an operation before finalization, replacement management information is recorded in the TDMA. More specifically, each time a replacement process associated with rewriting of data or a replacement process for handling a defect is performed, replacement management information is additionally recorded in the TDMA (or in the ATDMA formed in the OSA if the TDMA is full).

Thus, the replacement management is performed using the TDMA (and further the ATMDA) without using the DMA until the disk is finalized. When the disk is finalized, the replacement management information existing at that time in the TDMA (and the ATDMA, if the ATDMA is used) is recorded in the DMA. Thereafter, the replacement management is performed based on the replacement management information recorded in the DMA.

### 2. DMA

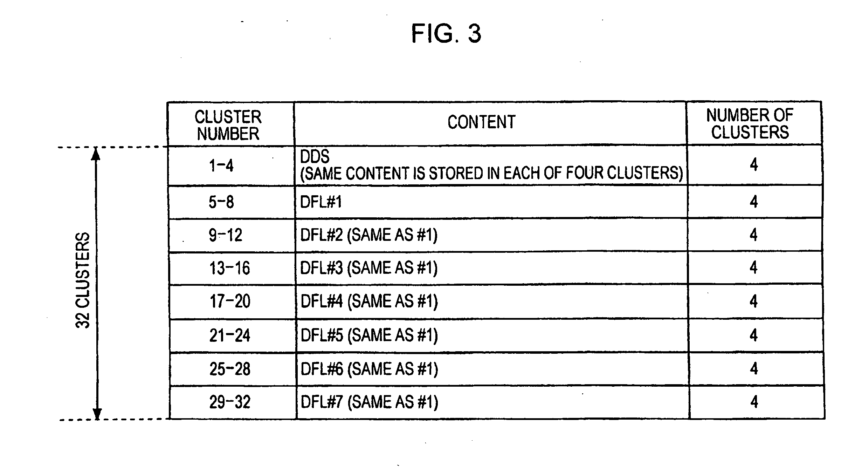

Fig. 3 shows the structure of each DMA formed in the lead-in zone and the lead-out zone.

In this specific example, the DMA has a size of 32 clusters. Note that the size of the DMA is not limited to 32 clusters.

Each cluster includes 65536 bytes, which are equal to minimum units in which data is recorded. Each cluster is divided into 32 parts called sectors (or data frames) each including 2048 bytes. The sector and the data frame are equal in terms of the user data size, but they are different in that the sector is a physical data unit and the data frame is a logical data unit.

An address is assigned to each sector. The physical sector address is referred to as a PSN (Physical Sector Number), and the logical sector address is referred to as an LSN (Logical Sector Number).

In Fig. 3, data contents described in 32 clusters with cluster numbers 1 to 32 in the DMA and the number of clusters of respective data contents are shown.

In the DMA, DDSs (Disc Definition Structures) representing the details of the disk are described in four clusters with cluster numbers 1 to 4.

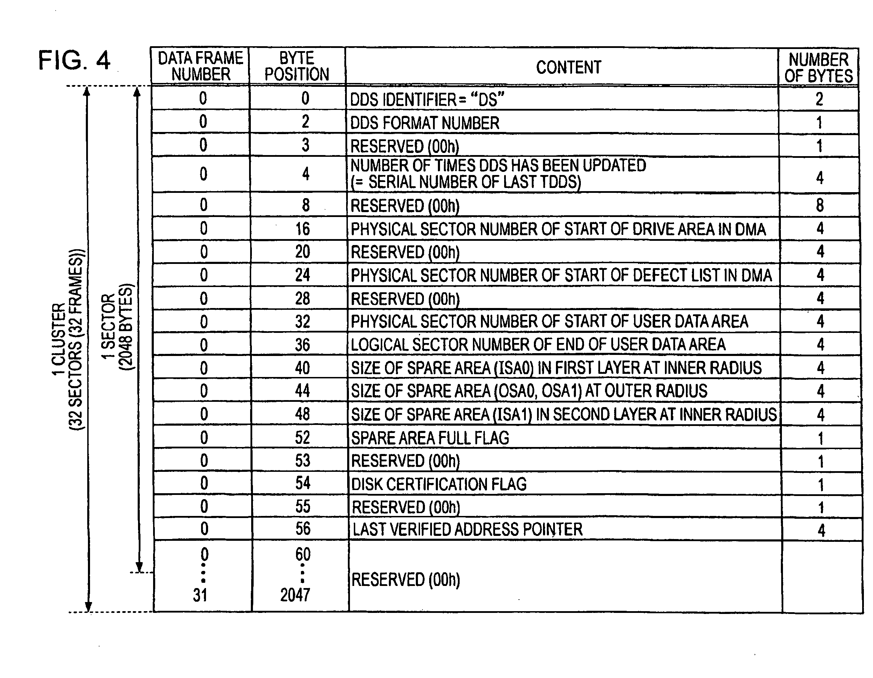

Each DDS has a size of one cluster, and DDSs which are the same in content are recorded in these four respective clusters. The content of each DDS will be described in detail later with reference to Fig. 4.

Four clusters with cluster numbers 5 to 8 are used as a first recording area (DFL #1) of a defect list DFL. Data of the defect list DFL is described in units of four clusters. Replacement addresses (DFL entries and DOW entries (which will be described later)) are listed in the DFL.

Four clusters with cluster numbers 9 to 12 are used as a second recording area (DFL #2) of the defect list DFL.

Similarly, four clusters are prepared as a recording area for each of third and following defect lists DFL #3 to DFL #6, and four clusters with cluster numbers 29 to 32 are used as a seventh recording area (DFL #7) of the defect list DFL.

That is, seven recording areas are prepared for use by defect lists DFL #1 to DFL #7 in the DMA having 32 clusters.

In optical disks of the write once type in which writing of data is allowed only once, recording of data into the DMA is allowed only when finalizing is performed. The seven defect lists DFL #1 to DFL #7 recorded in the DMA are identical in content to each other to achieve interchangeability.

The structure of the defect list DFL is the same as the structure of the TDFL (Temporary DFL) in the TDMA which will be described later.

Fig. 4 show contents of DDS recorded at the first position in the DMA shown in Fig. 3.

As described earlier, the DDS includes one cluster (65536 bytes).

In Fig. 4, byte positions in the DDS including 65536 bytes are defined such that the first byte position in the DDS is defined as byte 0. The number of bytes indicates the number of bytes of each data content.

Two bytes at byte positions 0 and 1 are used to describe a DDS identifier (="DS") identifying that the present cluster is for the DDS.

One byte at the byte position 2 represents the DDS formant number (format version number).

Four bytes at byte positions 4 to 7 are used to describe the number of times the DDS has been updated (DDS update count). Note that in the present embodiment, replacement management information is recorded in the DMA only once when the finalization is performed and no updating is performed. Instead, the replacement management information is recorded in the TDMA and updated. Thus, the number of times the DDS (TDDS (Temporary DDS)) has been updated in the TDMA is recorded at the byte positions 4 to 7 of the DDS when the finalization is performed.

Four bytes at byte positions 16 to 19 are used to describe the first physical sector address of the drive area in the DMA.

Four bytes at byte positions 24 to 27 are used to describe the first physical sector address of the defect list DFL in the DMA.

Four bytes at byte positions 32 to 35 are used to describe the PSN (Physical Sector Number) indicating the first position (ADus in Fig. 1) of the user data area in the data zone, that is, the position of the LSN (Logical Sector Number) of "0".

Four bytes at positions 36 to 39 are used to describe the LSN (Logical Sector Number) of the end position (ADue in Fig. 1) of the user data area in the data zone.

Four bytes at positions 40 to 43 are used to describe the size of the ISA in the data zone.

Four bytes at positions 44 to 47 are used to describe the size of the OSA in the data zone.

Four bytes at positions 48 to 51 are used to describe the size of the ISA (of the second layer, when the disk is of the two-layer type) in the data zone.

One byte at the byte position 52 is used to describe a spare area full flag indicating whether data rewriting using the ISA or the OSA is allowed. When the ISA or the OSA has been fully used, the spare area full flag is set to indicate that the ISA or the OSA has been fully used.

One byte at the byte position 54 is used to describe a disk certification flag indicating a disk authentication status.

Four bytes at positions 56 to 59 are used to describe a last verified address pointer pointing to a last verified address.

The other byte positions are all reserved (undefined), and 00h is stored.

The DMA has the above-described data structure, and is used to record the replacement management information. Note again that the information is recorded in the DMA when the disk is finalized. That is, when the disk is finalized, the latest replacement management information recorded in the TDMA is reflected in the DMA.

Before the finalization, the replacement processing for the defect management or the data rewriting and the updating of the corresponding replacement management information are performed using the TDMA, which will be described next below..

### 3. TDMA

### 3.1 TDMA Structure and TDMS Updating Unit

Now, the TDMA formed in the management/control information area as shown in Fig. 1 or 2 is described. As with the DMA, the TDMA (temporary DMA) is an area for recording replacement management information. More specifically, each time a replacement process associated with rewriting of data or a replacement process for handling a detected defect is performed, replacement management information is additionally recorded in the TDMA.

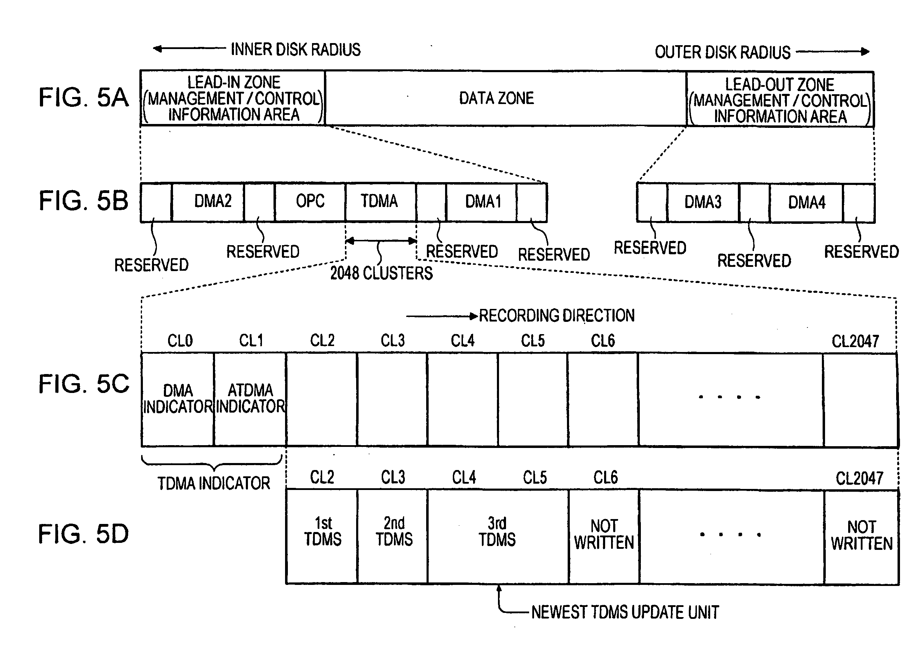

Fig. 5 shows the structure of the TDMA. As shown in Figs. 5A and 5B, the size of the TDMA formed in the management/control information area is set to, for example, 2048 clusters.

The structure of the TDMA with 2048 clusters is shown in Fig. 5C.

First two clusters CL0 and CL1 of the TDMA are used as TDMA indicators.

More specifically, the cluster CL1 serves as an ATDMA indicator. When information is recorded in the ATDMA (additional TDMA) for the first time, a structure including the newest TDDS (Temporary Disc Definition Structure) is described in the ATDMA indicator.

The cluster CL0 serves as a DMA indicator. When replacement management information is recorded in the DMA as shown in Fig. 3, necessary information is extracted from the newest TDMS (Temporary Disc Management Structure) and recorded in the DMA indicator.

If information is already stored in the cluster CL1, this means that the newest TDMS can be acquired from the ATDMA. If information is already stored in the cluster CL0, this means that the disk has already been finalized and write-prohibited, and that the newest disk information can be acquired from the DMA.

Clusters CL2 to CL2047 of the TDMA are used to record disk information or updated replacement management information.

The structure represented by the disk information and the replacement management information recorded in the clusters CL2 to CL2047 is referred to as the TDMS (Temporary Disc Management Structure).

In the TDMS, information is additionally recorded in varying units called TDMS updating units varying in the range from 1 to N. In a sequential recording mode, N is set to 4. In two-layer disks, N is set to 8.

For example, in the state shown in Fig. 5D, a TDMS updating unit with a size of one cluster has been first recorded in the cluster CL2, a TDMS updating unit with a size of one cluster has been then recorded in the cluster CL3, and a TDMS updating unit with a size of two clusters has been further recorded in the clusters CL4 and CL5.

Each time it becomes necessary to update the disk information or the replacement management information, TDMS is described in units of TDMS updating units, additionally and sequentially, in successive clusters. When TDMS updating units are recorded, a newest TDMS updating unit is recorded in one or more clusters immediately following the last recorded cluster without creating a space.

When the write once disk according to the present embodiment is used in the sequential recording mode, TDMS includes three elements, that is, TDDS (Temporary Disc Definition Structure), TDFL (Temporary Defect List), and SRRI (Sequential Recording Range Information), which are all recorded in the same TDMA.

The TDDS includes information associated with management of the TDMS. The TDFL includes replacement information (DOW entries and DFL entries). The SRRI includes management information associated with SRR (Sequential Recording Range), which corresponds to a track of CD, DVD, or the like. Each of these three elements will be described in further detail later.

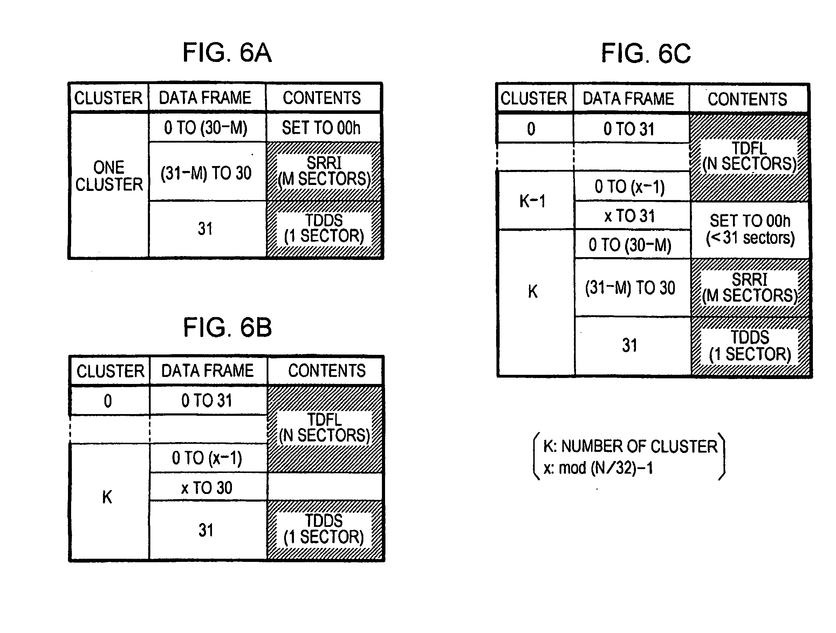

Figs. 6A to 6C show examples of structures of TDMS updating units.

In any case, each TDMS updating unit includes a TDDS with a size of one sector, which is disposed at the end of the cluster(s) forming the TDMS updating unit.

When the TDMS updating unit includes a TDFL, the TDFL is disposed in as many sectors (data frames) as needed at the beginning of the TDMS updating unit.

When the TDMS updating unit includes SRRI, the SRRI is disposed in as many sectors (data frames) as needed immediately before the TDDS at the end of the TDMS updating unit.

Fig. 6A shows an example of a TDMS updating unit including SRRI and TDDS. In this example, the TDMS updating unit includes one cluster, and the TDDS is disposed in the sector (data frame 31) at the end of the cluster. If the SRRI has a size of M sectors, the SRRI is located in M sectors (data frames 31 - M to 30) before the TDDS.

In this case, because the TDMS updating unit does not include a TDFL, zero (00h) is recorded in data frames 0 to 30 - M.

Fig. 6B shows an example of a TDMS updating unit including a TDFL and a TDDS. In this example, the TDMS updating unit includes K clusters, and the TDDS is disposed in a sector (a data frame 31 of a cluster K) at the end of the TDMS updating unit. If the TDFL has a size of N sectors, the TDFL is located in N sectors (data frames 0 in the cluster 0 to data frame x - 1 in the cluster K) at the beginning of the TDMS updating unit, where x = mod(N/32) -1.

In this case, because the TDMS updating unit does not include SRRI, sectors from a data frame x of the cluster K to a data frame 30 are filled with zero data (00h).

Fig. 6C shows an example of a TDMS updating unit including a TDFL, SRRI and a TDDS. In this example, the TDMS updating unit includes K clusters, and the TDDS is disposed in a sector (a data frame 31 of a cluster K) at the end of the TDMS updating unit. If the TDFL has a size of N sectors, the TDFL is located in N sectors (data frames 0 in the cluster 0 to data frame x - 1 in the cluster K - 1) at the beginning of the TDMS updating unit.

The SRRI is located in M sectors (data frames 31 - M in the cluster K to 30) before the TDDS.

If an area is left between the TDFL and the SRRI, the area is filled with zero data (00h), as shown in Fig. 6C.

The number of clusters forming the TDMS updating unit varies depending on the size of the TDFL and/or the size of the SRRI.

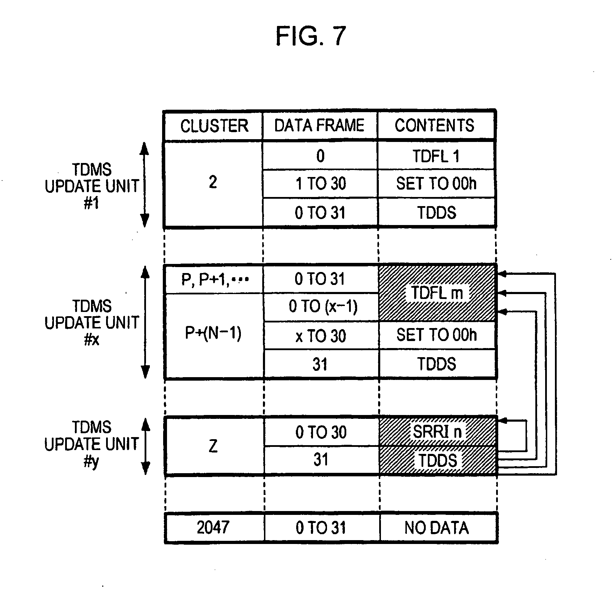

Fig. 7 shows an example of a manner in which TDMS updating units are additionally recorded such that a TDMS updating unit #1 with a size of two clusters is first recorded, and then TDMS updating units #2, #3,..., #x,..., #y are sequentially and additionally recorded.

A TDMS updating units is additionally recorded in one of manners shown in Figs. 6A, 6B, and 6C depending on whether it is required to update a TDFL, SRRI, or both a TDFL and SRRI. For example, when it is required to update SRRI but it is not required to update the TDFL, a TDMS updating unit in the form shown in Fig. 6A is additionally recorded.

In the example shown in Fig. 7, the TDMS updating unit #y is the newest one. Although all TDMS updating units include a TDDS, the TDDS included in this newest TDMS updating unit #y is effective at this point of time.

This newest TDDS indicates effective SRRI and TDFL.

In the present example, the TDMS updating unit #y is recorded to update the SRRI, and thus, in the TDDS in the TDMS updating unit #y, SRRIn is specified as effective SRRI.

If the TDFLm described in the TDMS updating unit #x is an effective TDFL at this point of time, then, in the newest TDDS, this TDFLm in the TDMS updating unit #x is specified as the effective TDFL.

That is, the TDMS is additionally recorded as required in the cluster CL2 and following clusters of the TDMA shown in Fig. 5 such that the TDDS described in the newest TDMS updating unit is employed as the effective TDDS which indicates the newest SRRI and TDFL.

### 3.2 TDDS

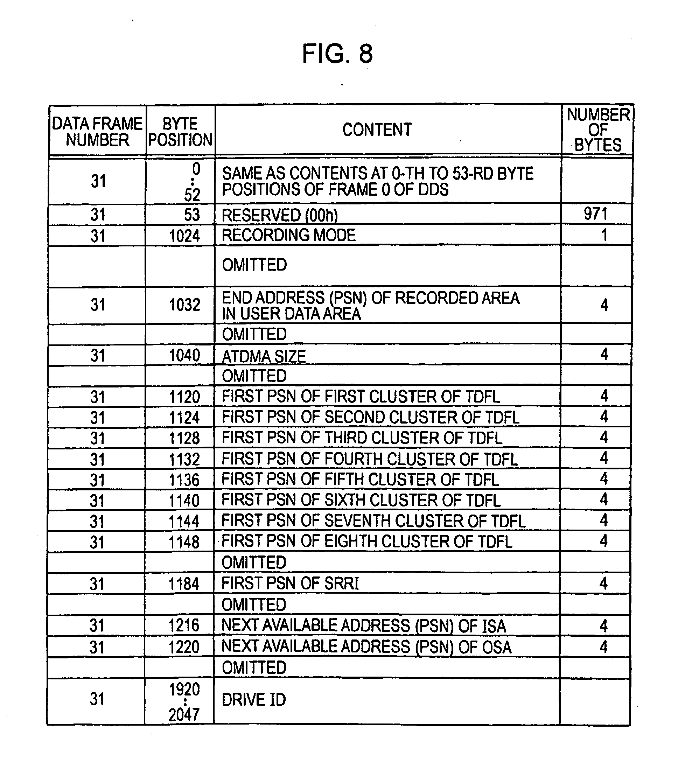

Fig. 8 shows the structure of a TDDS (Temporary Disc Definition Structure) recorded in a sector at the end of a TDMS updating unit.

The TDDS includes one sector (2048 bytes) and includes a content equivalent to the content of the DDS of the DMA described earlier with reference to Fig. 4. The DDS has a size of one cluster (65536 bytes). However, in the DDS, as described earlier with reference to Fig. 4, actually meaningful information exits from byte 0 to byte 59 of data frame 0. That is, actually meaningful information exits in the first sector (first data frame) of one cluster. Therefore, although the size of the TDDS is one sector, the TDDS can contain the principal content of the DDS.

Because a TDDS is recorded at the final sector of the final cluster of a TDMS updating unit, the TDDS is recorded at byte positions 0 to 2047 of the data frame 31 as shown in Fig. 8.

The content described at byte positions 0 to 53 of the TDDS is the same as that of the DDS. In other words, when the finalization is performed, information is recorded in the DDS such that the above-described content of the TDDS is reflected in the DDS.

In an area up to byte position 53 of the DDS and also that of the TDDS, information recorded at byte positions 4 to 7 indicates the number of times the DDS has been updated as shown in Fig. 4. In the case of the TDDS, this information indicates the number of times a TDDS has been produced. In the TDDS, the start PSN of the defect list at byte positions 24 to 27 has a value of 0 until the disk is closed (to disable further additional writing of data).

In the DDS recorded in the DMS when the disk is closed, values at byte positions 4 to 7 of the TDDS, which is the newest at the time when the finalization is performed, are recorded at byte positions 4 to 7 in the DDS, and the start PSN of the defect list at byte positions 24 to 27 is also recorded.

At byte position 1024 and following byte positions in the TDDS, information, which is not included in the DDS, is recorded. Note that in Fig. 8, of contents recorded at byte position 1024 and following byte positions, only those relating to the operation according to the present embodiment of the invention are shown but the other contents are omitted.

One byte at byte position 1024 is used to describe the recording mode of the disk.

Four bytes at byte positions 1032 to 1035 are used to describe the final physical sector address PSN of a data-written area in the user data area.

Four bytes at byte positions 1040 to 1043 are used to describe the size of the ATDMA.

Four bytes at byte positions 1120 to 1123 are used to describe the first PSN of the first cluster of the TDFL.

Similarly, the first PSN of each of second to eighth clusters of the TDFL is recorded in units of four bytes at following byte positions.

The first PSN of the first cluster of the TDFL to the first PSN of the eighth cluster of the TDFL serve as pointers that point to corresponding TDFLs. That is, these pointers point to effective TDFLs as shown in Fig. 7.

Four bytes at byte positions 1184 to 1187 are used to describe the first PSN of the SRRI. This first PSN of the SRRI serves as a pointer that points to the SRRI as shown in Fig. 7.

Four bytes at byte positions 1216 to 1219 are used to describe the next available PSN of the ISA.

Four bytes at byte positions 1220 to 1223 are used to describe the next available PSN of the OSA.

If the ISA or the OSA is used for the replacement process, the value of the next available PSN of the ISA or the next available PSN of the OSA is updated so as to indicate the address of an area that will be used next for a next replacement process.

Bytes at byte positions 1920 to 2048 are used to describe the drive ID.

### 3.3 TDFL

Now, the structure of the TDFL (temporary DFL) is described below. As described earlier, the TDFL is updated by describing updated information in the TDMS updating unit.

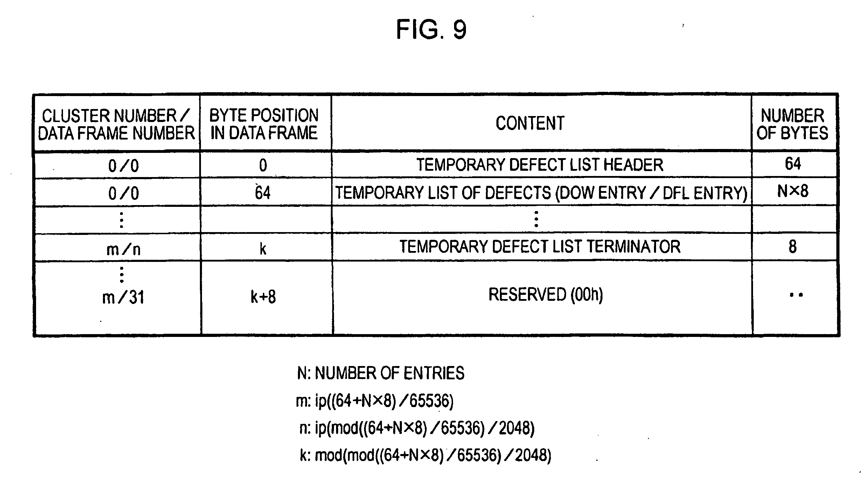

In a table shown in Fig. 9, cluster numbers in the TDFL and data frame numbers (sector units of 2048 bytes) are described in a leftmost column, and byte positions in data frames are described in a next column.

As for contents of the TDFL, as shown in this table, 64 bytes at byte positions 0 to 63 are for a TDFL header (Temporary Defect List Header) in which management information associated with the TDFL is described.

More specifically, this TDFL header includes information indicating TDFL clusters, the version, the number of times the TDFL has been updated (recorded for updating), and the number of entries (DFL/DOW entries) of the information block of the TDFL.

In a following area starting at byte position 64, a temporary list of defects is described. The temporary list of defects includes a plurality of information blocks each having a size of 8 bytes. When the temporary list of defects includes N information blocks, the total size of the list is equal to N x 8 bytes.

One piece of replacement information indicating a DFL entry or a DOW entry is recorded in one information block having a size of 8 bytes.

For convenience of explanation, it is assumed that the DFL entry is replacement information associated with a defective area, and the DOW (Data OverWrite) entry is replacement information associated with rewriting of data, although there is no practical difference between the DFL entry and the DOW entry.

Because DFL entries and DOW entries indicate similar processes (replacement processes), they can be described in a mixed fashion in information blocks in temporally lists of defects.

In the temporary list of defects, a plurality of DFL entries and DOW entries are described. In the case of single-layer disks, the maximum total number of DFL entries and DOW entries is 32759.

In an area immediately following the temporary list of defects, a temporary defect list terminator with 8 bytes is recorded to indicate that the temporary list of defects is terminated herein. The remaining area following the temporary defect list terminator is filled with 0.

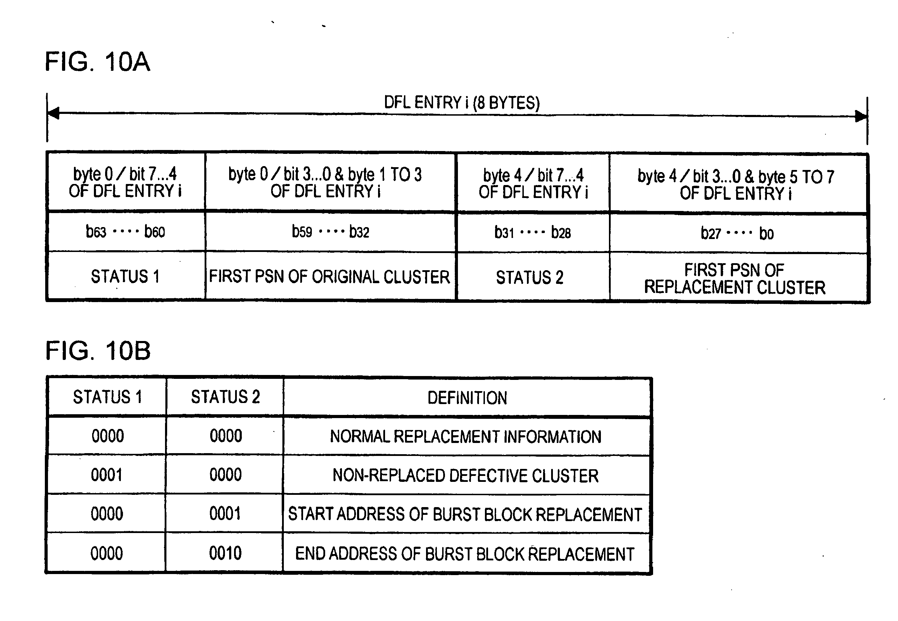

Fig. 10A shows the structure (format) of an information block having a size of 8 bytes in which a DFL entry is described. Note that when a DOW entry is described in an information block, the information block has a similar structure.

Of 8 bytes (= 64 bits), 4 bits from b63 to b60 are used to describe status #1.
28 bits from b59 to b32 are used to describe an original cluster address (the first PSN of an original cluster).
4 bits from b31 to b28 are used to describe status #2.
28 bits from b27 to b0 are used to describe a replacement cluster address (the first PSN of a replacement cluster).

The status #1 and #2 are defined as shown in Fig. 10B.

When the status #1 is "0000" and the status #2 is also "0000", the DFL entry (or the DOW entry) in which these status #1 and #2 are described is normal replacement information.

That is, in this case, a combination of the original cluster address and the replacement cluster address described in this entry specifies a replacement process for one cluster to handle a detected defect or to rewrite data.

In the case in which the DFL entry specifies a replacement process for a defective cluster, the replacement cluster address is within the spare areas (the ISA or the OSA) shown in Fig. 1.

In the case of the DOW entry specifying a replacement process for data rewriting, the replacement cluster address is an address selected within the user data area. In this case, the replacement cluster address may be within the ISA or the OSA.

When the status #1 is "0001" and the status #2 is "0000", the DFL entry indicates a defective cluster that has not been replaced. In the present embodiment, as will be described later, when a defective cluster is detected during the writing of data, there is a possibility that the replacement process using the ISA or the OSA is impossible. In such a case, the replacement process is not performed, and the defective cluster is registered in one DFL entry. In this case, the DFL entry is described such that 0001" is described in the status #1, "0000" is described in the status #2, and the address of the defective cluster is described in the original cluster address at bits b59 to b32. In this case, there is no replacement cluster, and zero data is written at bits b27 to b0.

When the status #1 is "0000" and the status #2 is "0001", the entry indicates the start address of burst block replacement.

When the status #1 is "0000" and the status #2 is "0010", the entry indicates the end address of burst block replacement.

The burst block replacement refers to a process of replacing a set of plural clusters located at successive physical positions.

When the status #1 is "0000" and the status #2 is "0001", the first PSN of the first cluster of a range of a plurality of clusters to be replaced, and the first PSN of the first cluster of a range of a plurality of replacement clusters are described in the entry.

When the status #1 is "0000" and the status #2 is "0010", the first PSN of the final cluster of a range of a plurality of clusters to be replaced, and the first PSN of the final cluster of a range of a plurality of replacement clusters are described in the entry.

Based on these two entries, it is possible to manage the process of replacing a set of plural successive clusters. That is, to replace a set of plural clusters located at physically successive positions, it is not necessary to describe one entry for each cluster separately for all clusters, but it is sufficient to describe only two entries respectively specifying the first cluster and the final cluster.

When a disk on which DFL entries and DOW entries are described in the same format and located in a mixed fashion in the TDFL is mounted on an apparatus having no capability rewriting data, DFL entries and DOW entries are all regarded as DFL entries and clusters are replaced in a normal manner regardless of the type of entries. Thus, the disk according to the present embodiment has compatibility, in terms of reading, with usual disks.

It is also necessary to achieve compatibility with an apparatus having no capability of burst block replacement. To this end, when the newest contents of the TDFL are recorded in the DFL in the DMA in the finalization process, it is needed to convert entries associated with sets of plurality of clusters subjected to the burst block replacement into the form of normal entries respectively corresponding to individual clusters. The resultant entries of replacement information are all in the normal format in which replacement information of each cluster is described in one entry, and thus compatibility in terms of reading is achieved for a reading apparatus having no capability of bust block replacement.

### 3.4 SRR and SRRI

Now, the SRR (Sequential Recording Range) and the SRRI (Sequential Recording Range Information) are described below.

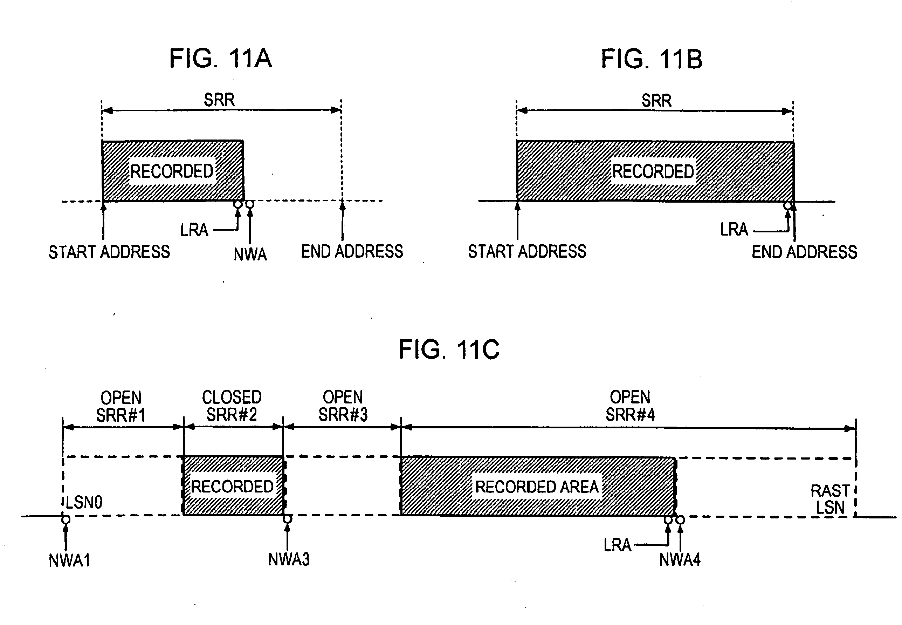

Figs. 11A to 11C show examples of structures of the SRR. The SRR refers to a sequential recording range used when a write once disk according to the present embodiment of the invention is operated in a sequential recording mode. The SRR has features described below in (1) to (5), similar to features of tracks of a CD.
(1) Within each SRR, recording is performed in a direction in which the address increases. Each SRR has one writable address (writing point) indicating a next writable address (NWA) represented in PSN.

As shown in Fig. 11A, when a last recorded address (LRA) represented in PSN in the SRR is given, the NWA is calculated as follows.
NWA = (ip(LRA/32) + 1) * 32 (for LRA ≠ 0)
NWA = Start PSN of the SRR (for LRA = 0)
where ip(N) is a greatest integer smaller than N.

That is, when data is already recorded in the SRR, the NWA is given by the first address (PSN) of the cluster next to the cluster including the LRA. On the other hand, when any data is not yet recorded in the SRR, the NWA is given by the first address (PSN) of the SRR.
(2) The SRR can be in either open status or closed status.

The example of the SRR shown in Fig. 11A is in the open status in which recording of additional data is allowed (that is, the SRR has an NWA). The example of the SRR shown in Fig. 11B is in the closed status in which recording of additional data is not allowed (that is, the SRR has no NWA).
(3) A process of allocating an open SRR on a disk is referred to as reserving of an SRR, and a process of converting an open SRR into a closed SRR is referred to as closing of an SRR.
(4) A plurality of SRR's (up to 7927 SRR's) can exit on a disk. Of these SRR's, up to 16 SRR's can be in the open status at the same time.
(5) SRR's into which data is to be recorded can be selected in an arbitrary order.

In a practical operation, an open SRR is reserved when a file system management area is allocated in a first part of file data, file system management information is recorded in the file system management area after file data is recorded on a disk.

Fig. 11C shows an example of layout of a disk for a case in which data is recorded in the sequential recording mode.

On this disk, there are four SRR's (SRR #1 to SRR #4), wherein SRR #1, SRR #3, and SRR #4 are in the open status, and SRR #2 is in the closed status.

When data is additionally recorded on this disk, it is allowed to record the data starting from any one of NWA1, NWA3, and NWA4.

To mange the SRR's, SRRI is described in a TDMS updating unit.

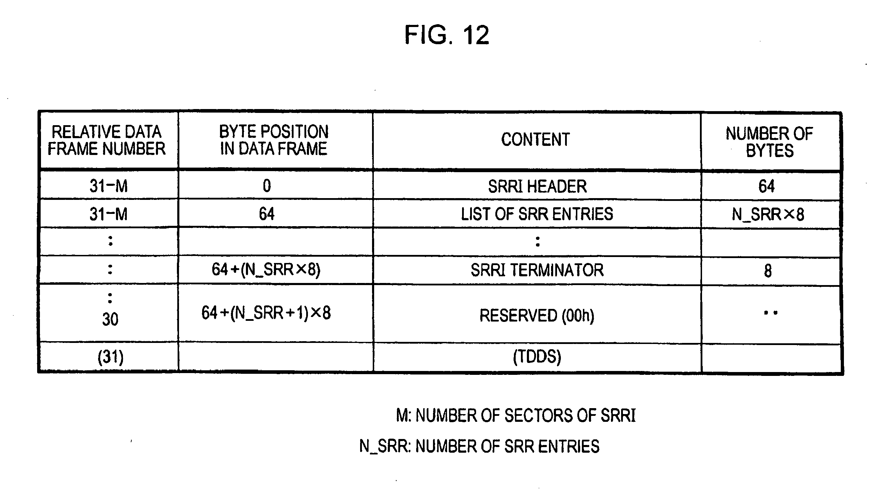

Fig. 12 shows a structure of SRRI.

The SRRI includes data frames 1 to 31.

In Fig. 12, relative data frame numbers indicate respective data frames in a cluster. As described above, SRRI is located immediately before a TDDS recorded in the final data frame 31 of a TDMS updating unit. Therefore, if the SRRI has a size of M sectors, the SRRI is located in data frames 31 - M to 30. In Fig. 12, byte positions in data frame indicate internal byte positions in each data frame.

First 64 bytes of SRRI are used to record an SRRI header in which management information associated with the SRRI is described.

More specifically, the SRRI header includes information indicating SRRI clusters, the version, the number of times the SRRI has been updated (recorded for updating), and the total number of SRR entries (blocks in which information associated SRR is recorded).

In a following area starting from byte position 64, a list of SRR entries is described.

Each SRR entry in the list of SRR entries has a size of 8 bytes. If the list includes N SRR entries, the total size of the list is equal to N x 8 bytes.

In an area immediately after the final SRR entry, an SRRI terminator with a size of 8 bytes is recorded. The remaining entire area of the cluster is filled with 0.

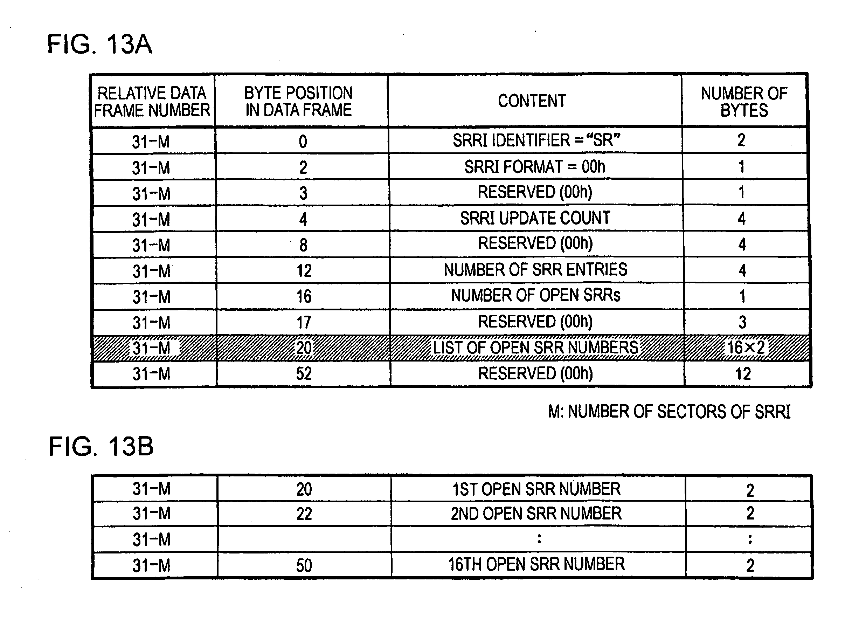

Fig. 13A shows the structure of the SRRI header. 2 bytes at byte positions 0 and 1 are used to record an SRRI ID (Identifier) in which management information associated with the SRRI is described.

One byte at the byte position 2 is used to record the version of the SRRI format.
4 bytes at byte positions 4 to 7 are used to describe an SRRI update count indicating the number of times the SRRI has been updated.
4 bytes at byte positions 12 to 15 are used to record the total number of SRR entries.

One byte at byte position 16 is used to record the number of open SRRs.

In a following area starting at byte position 20, a list of all open SRR numbers is recorded.

The structure of this list of SRR numbers is shown in Fig. 13B. Each open SRR number is described by two bytes, and a total of 16 open SRR numbers is described by 32 bytes. When the total number of open SRRs is less than 16, the remaining part of the list of open SRR numbers is filled with 0. Each time a change occurs in the total number of open SRRs, the list of open SRR numbers is updated, and open SRR numbers are sorted in descending order.

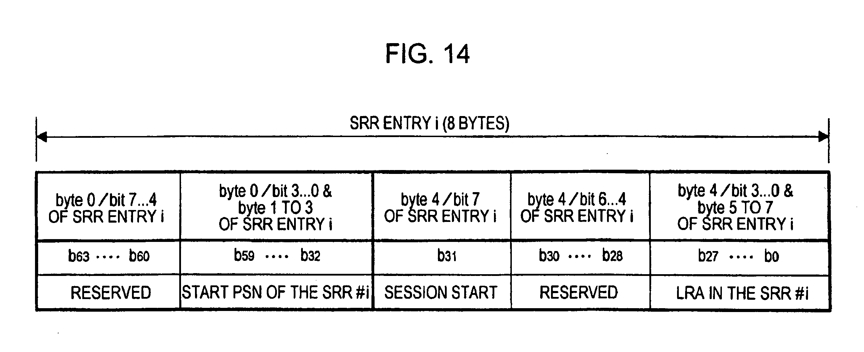

Fig. 14 shows the structure of an SRR entry registered in the list of SRR entries (shown in Fig. 12) following the SRRI header. In Fig. 14, the entry number is denoted by i.

Each SRR entry indicating a corresponding SRR is formed to have a size of 8 bytes (64 bits).
4 bits from b63 to b60 are reserved (undefined).
28 bits from b59 to b32 are used to describe the start address of SRR #i located in the user data area. More specifically, the first PSN of the first cluster of the SRR #i is described.

A session starts from a bit b31. That is, the bit b31 indicates whether the present SRR is the first SRR of the session. If this bit is set to 1, the present SRR is the first SRR of the session, that is, the session starts from this SRR.
3 bits from b30 to b28 are reserved (undefined).
28 bits from b27 to b0 are used to describe the LRA (Last Recorded Address (Fig. 11)), represented in PSN, in the SRR #i.

By the SRRI including the SRRI header and the SRR entries, management is performed as to the number of SRRs existing in the user data area, the addresses thereof, and the LRA of each SRR. As described earlier, the NWA (Next Writable Address) of each open SRR can be calculated from the LRA (Last Recorded Address) described in the SRR entry corresponding to the open SRR.

The SRRI is updated as required, for example, when an SRR is reserved, additional data writing is performed starting from the NWA in an SRR, or when an SRR is closed. The updating of the SRRI is performed by describing a TDMS updating unit including the SRRI.

### 3.5 Replacement Process Using Spare Area

The replacement process using the ISA and OSA as fixed spare areas is described below.

As shown in Fig. 15, the ISA (Inner Spare Area) and the OSA (Outer Spare Area) serving as spare areas for use in the replacement process to handle defective clusters are respectively formed at the inner end and the outer end of the data zone.

The sizes of the ISA and the OSA are defined in the DDS (TDDS) described above.

The sizes of the ISA and the OSA are determined when the initialization is performed, and the sizes are not changed thereafter.

The replacement process using the ISA or the OSA is performed as follows.

For example, when data is recorded in accordance with a request issued by a host apparatus, if a cluster specified by a write address is defective, the data cannot be correctly recorded. In this case, the data is recorded not in the defective cluster but in a cluster in the ISA or the OSA. This process is called the replacement process.

The replacement process is managed by DFL entries described earlier. More specifically, the original cluster address indicating the address of a defective cluster that cannot be used to record data, and the replacement cluster address indicating the address of a cluster in the ISA or the OSA in which the data is written are registered in one DFL entry.

In the replacement process, as shown in Fig. 15, clusters in the ISA and OSA are used in ascending order in terms of address.

In this format, it is allowed to use a part or all of the OSA as the ATDMA (additional TDMA).

When writing of data at an address where another data exists is requested, that is, when rewriting of data is requested, a replacement cluster in which to write the specified data is basically selected within the user data area, for example, at the NWA described in an SRR. Alternatively, as described earlier, a cluster in the ISA or the OSA may be used as a replacement cluster.

In any case, a DOW entry is registered depending on the replacement process for rewriting of data. By managing the replacement for rewriting of data by using DOW entries in the TDFL in the TDMA, it is possible to achieve rewriting of data using a write once disk (such that the write once disk operates as a rewritable disk when seen from the OS or the file system of the host system).

### 4. Disk Drive and host apparatus

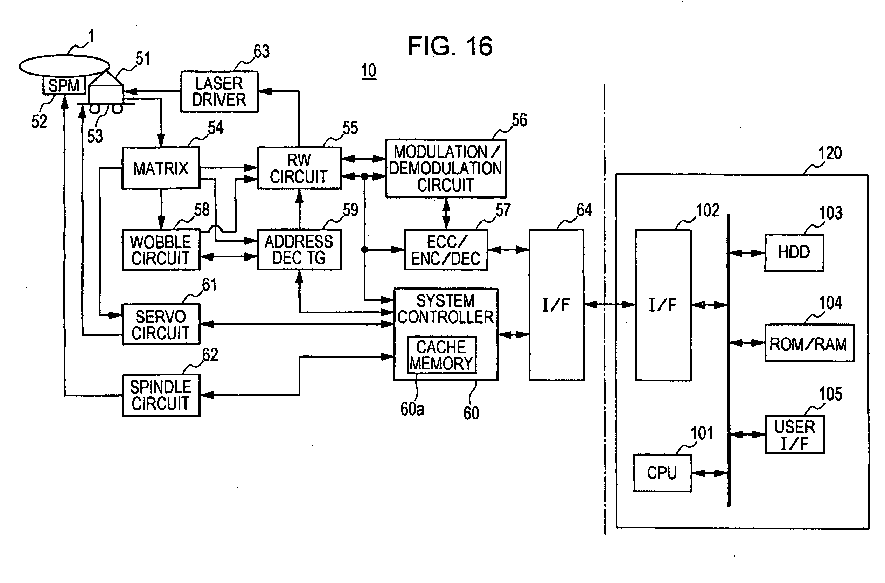

An example of a recording system for recording data on the write once disk is described below with reference to Fig. 16. The recording system includes a disk drive (a recording and reading device) 10 and a host apparatus 120.

The disk drive 10 is capable of formatting a write once disk, such as a disk in a state in which only a pre-recorded information area PIC shown in Fig. 1 is formed and nothing is recorded in its write once area, into a state having the disk layout shown in Fig. 1. The disk drive 10 is also capable of writing and reading data in the user data area of a disk which has been formatted in the above-described manner. Furthermore, the disk drive 10 is capable of updating the TDMA (or the ATDMA) as required.

In Fig. 16, a disk 1 mounted on the disk drive 10 is a write once disk of the above-described type. The disk drive 10 is also capable of writing and reading data for a rewritable disk and reading data from a ROM disk.

The disk 1 is placed on a turn table (not shown), and is rotated at a constant linear velocity (CLV) by a spindle motor 52 during a writing/reading operation.

Using an optical pickup (optical head) 51 ADIP addresses embedded as wobbling in groove tracks on the disk 1 and pre-recorded management/control information are read.

When the initialization is performed or when user data is recorded, management/control information or user data is recorded by the optical pickup 51 in tracks of the write once area. In the reading operation, the recorded data is read using the optical pickup 51.

Although not shown in Fig. 16, the pickup 51 includes a laser diode serving as a laser beam source, a photodetector for detecting reflected light, an objective lens through which to output a laser beam, and an optical system for illuminating the recording surface of the disk with the laser beam via the objective lens and for guiding the reflected light to the photodetector.

In the pickup 51, the objective lens is held by a two-shaft mechanism such that it is movable in both tracking direction and focus direction.

The pickup 51 as a whole is movable by a thread mechanism 53 in a radial direction of the disk.

The laser diode in the pickup 51 is driven by a driving signal (driving current) output from a laser driver 63 to emit the laser beam.

Light reflected from the disk 1 is detected by the photodetectorin the pickup 51 and converted into an electric signal corresponding to the intensity of detected light. The electric signal is supplied to a matrix circuit 54.

The matrix circuit 54 includes a current-voltage converter for converting currents output from a plurality of photodetectors into voltage signals and a matrix operation/amplification circuit for performing a matrix operation on the voltage signals to generate signals such as a high-frequency signal (reproduced data signal) corresponding to reproduced data, a focus error signal for use in servo control, and a tracking error signal.

Furthermore, a signal associated with wobbling of grooves, that is, a push-pull signal for detecting wobbling is also generated.

In some cases, the matrix circuit 54 is disposed in the pickup 51. The reproduced data signal output from the matrix circuit 54 is supplied to a reader/writer circuit 55, the focus error signal and the tracking error signal are supplied to a servo circuit 61, and the push-pull signal is supplied to a wobble circuit 58.

The reader/writer circuit 55 performs a binarization process on the reproduced data signal and generates a reproduced clock signal by using a PLL. The resultant reproduced data is supplied to a modulation/demodulation circuit 56.

The modulation/demodulation circuit 56 includes a functional part serving as a decoder in the reading operation and a function part serving as an encoder in the writing operation.

In the reading operation, run-length limited codes are decoded based on the reproduced clock signal.

An ECC encoder/decoder 57 performs an ECC encoding process to add error correction code to data in the writing operation and also performs an ECC decoding process to correct errors in the reading operation.

In the reading operation, data decoded by the modulation/demodulation circuit 56 is captured into an internal memory and the error detection/correction process and the de-interleaving process are performed on the captured data thereby obtaining reproduced data.

The resultant decoded data output from the ECC encoder/decoder 57 is read in accordance with a command output from a system controller 60, and transferred to the host apparatus 120, such as a personal computer or an AV (Audio-Visual) device, connected to the disk drive 10 via an interface 64.

The push-pull signal associated with wobbling of grooves output from the matrix circuit 54 is processed by the wobble circuit 58. The push-pull signal associated with the ADIP information is decoded by the wobble circuit 58 into an ADIP address data stream and supplied to an address decoder 59.

The address decoder 59 decodes the supplied data to acquire an address value and supplies the acquired address value to the system controller 60.

The address decoder 59 generates the clock signal using the PLL based on the wobble signal supplied from the wobble circuit 58, and supplies the generated clock signal, for example, as an encode clock to various parts in the writing operation.

Of the push-pull signals associated with wobbling of grooves output from the matrix circuit 54, the push-pull signal indicating pre-recorded information PIC is passed through a band-pass filter in the wobble circuit 58, and the result signal is supplied to the reader/writer circuit 55. The signal is then binarized and converted into the form of a data bit stream. Furthermore, the signal is ECC-decoded and de-interleaved by the ECC encoder/decoder 57 to extract data indicating pre-recorded information. The extracted pre-recorded information is supplied to the system controller 60.

In accordance with the received pre-recorded information, the system controller 60 performs various processes including setting associated with operations and a copy protection process.

In the writing operation, data to be recorded is transmitted from the host apparatus 120. The data to be recorded is transferred via the interface 64 to the memory of the ECC encoder/decoder 57 and buffered therein.

In this case, the ECC encoder/decoder 57 encodes the buffered data. In the encoding process, an error correction code and a sub-code are added to the data. The resultant ECC-encoded data is modulated by the modulation/demodulation circuit 56, for example, in accordance with the RLL(1-7) PP method, and the resultant data is supplied to the reader/writer circuit 55.

During the writing operation, the above-described clock signal generated from the wobble signal is used as the encode clock signal serving as a reference clock signal in the encoding process.

After the data to be recorded is subjected to the encoding process, the data is subjected to a recording compensation process performed by the reader/writer circuit 55. In this recording compensation process, adjustments are made in terms of the characteristics of the recording layer, the spot shape of the laser beam, a fine adjustment of the optimum recording power depending on the recording linear velocity, and the laser drive pulse waveform. The resultant data is then supplied in the form of laser drive pulses to the laser driver 63.

In the laser driver 63, the supplied laser drive pulses are applied to the laser diode in the pickup 51 to drive the laser diode so as to emit a laser beam, by which to form pits on the disk 1 in accordance with the data.

The laser driver 63 includes an APC (Automatic Power Control) circuit whereby the laser output power is monitored using a laser power monitoring detector disposed in the pickup 51 and the laser output power is controlled at a constant value regardless of temperature or other conditions. In the writing/reading operation, the target value of the laser output power is specified by the system controller 60, and the laser output power is controlled so as to be equal to the specified target value.

The servo circuit 61 generates servo drive signals for controlling the focusing, the tracking, and the thread mechanism from the focus error signal and the tracking error signal supplied from the matrix circuit 54. Based on these servo drive signals, the servo circuit 61 performs the servo control operation.

More specifically, based on the focus error signal and the tracking error signal, the focus drive signal and the tracking drive signal are generated, and the focus coil and the tracking coil of the two-axis mechanism in the pickup 51 are respectively driven by the focus drive signal and the tracking drive signal. A tracking servo loop and a focus servo loop are formed by the pickup 51, the matrix circuit 54, the servo circuit 61, and the two-axis mechanism.

If the servo circuit 61 receives a track jump command from the system controller 60, the servo circuit 61 turns off the tracking servo loop and outputs a jump drive signal to perform a track jump operation.

The servo circuit 61 also generates the thread drive signal based on a thread error signal extracted from a low-frequency component of the tracking error signal in accordance with an access control command issued by the system controller 60, and the servo circuit 61 drives the thread mechanism 53 based on the generated thread drive signal. Although not shown in Fig. 16, the thread mechanism 53 has a mechanism including a main shaft by which the pickup 51 is held, a thread motor, and transmission gears. The thread motor is driven in accordance with the thread drive signal to move the pickup 51 in a sliding fashion to a specified position.

The spindle servo circuit 62 controls the spindle motor 52 so as to rotate at a constant linear velocity (CLV).

More specifically, the spindle servo circuit 62 acquires information indicating the current rotation speed of the spindle motor 52 from the clock signal generated in the PLL process on the wobble signal, and the spindle servo circuit 62 generates a spindle error signal by comparing the current rotation speed with a reference CLV value.

In the data reading operation, the reproduced clock signal (used as the reference clock signal in the decoding process) generated by the PLL in the reader/writer circuit 55 indicates the current rotation speed of the spindle motor 52. Therefore, the spindle error signal may be generated by comparing the current rotation speed detected from this clock signal with the reference CLV value.

The spindle servo circuit 62 outputs a spindle drive signal generated based on the spindle error signal thereby controlling the spindle motor 52 so as to rotate at the specified CLV value.

The spindle servo circuit 62 also generates a spindle drive signal in response to a spindle kick/brake control signal received from the system controller 60 and starts, stops, accelerates, or decelerates the spindle motor 52 using the generated drive signal.

The above-described operations of the servo system and the writing/reading system are controlled by the system controller 60 realized by a microcomputer.

The system controller 60 performs various processes in accordance with commands issued by the host apparatus 120.

For example, if the host apparatus 120 issues a write command, the system controller 60 first moves the pickup 51 to an address at which to write data. The system controller 60 then controls the ECC encoder/decoder 57 and the modulation/demodulation circuit 56 to perform the encoding process on data (such as MPEG video data or audio data) received from the host apparatus 120 in the above-described manner. Furthermore, the laser drive pulses output from the reader/writer circuit 55 are supplied to the laser driver 63, and thus recording is performed as described above.

On the other hand, if the host apparatus 120 issues a read command to request transfer of data (such as MPEG video data) recorded on the disk 1 to the host apparatus 120, the system controller 60 first performs a seek control operation to move the pickup 51 to a specified address. More specifically, the system controller 60 commands the servo circuit 61 to move the pickup 51 to a target position corresponding to the address specified by the seek command.

Thereafter, the system controller 60 performs control operations necessary to transfer the data of the specified data zone to the host apparatus 120. More specifically, the data is read from the disk 1, and the data is decoded and buffered by the reader/writer circuit 55, the modulation/demodulation circuit 56, and the ECC encoder/decoder 57. The resultant data is finally transferred to the host apparatus 120.

In the writing/reading operation described above, the system controller 60 may control the accessing and/or the writing/reading operation based on an ADIP address detected by the wobble circuit 58 and the address decoder 59.

At a particular point of time, for example, when the disk 1 is mounted, the system controller 60 reads the unique ID recorded in the BCA (if the BCA is formed) of the disk 1 and pre-recorded information (PIC) recorded in the form of wobbling grooves in the read-only area of the disk 1.

In this operation, the system controller 60 first performs a seek control operation to move the pickup 51 to the BCA and the pre-recorded data zone PR. More specifically, the system controller 60 commands the servo circuit 61 to move the pickup 51 to access the innermost radial position of the disk 1.

The system controller 60 then controls the pickup 51 to perform a trace-and-read operation to acquire a push-pull signal from reflected light information. The acquired signal is then subjected to the decoding process performed by the wobble circuit 58, the reader/writer circuit 55, and the ECC encoder/decoded 57. As a result, the BCA information or the pre-recorded information is acquired as reproduced data.

Based on the BCA information or the pre-recorded information read in the above-described manner, the system controller 60 performs various processes including a laser power setting process and a copy protection process.

In the example shown in Fig. 16, the system controller 60 includes a cache memory 60a used to store and update TDDS, TDFL, and/or SRRI read from the TDMA of the disk 1.

If an unfinalized disk is mounted as the disk 1 on the disk drive 10, then the system controller 60 controls various parts to read TDDS, TDFL, and SRRI recorded in the TDMA of the disk 1 and store the read information in the cache memory 60a.

Thereafter, if a replacement process is performed to write/rewrite data or to handle a defect, the SRRI and/or the TDFL stored in the cache memory 60a are updated.

A TDMS updating unit may be additionally recorded in the TDMA (or the ATDMA) of the disk 1 each time the SRRI and/or the TDFL are updated when a replacement process associated with writing or rewriting of data is performed. However, this causes the TDMA of the disk 1 to be consumed rapidly.

This problem can be avoided using the cache memory 60a as follows. That is, updating of the LRA (Last Recorded Address) of the SRRI in response to additional writing of data is performed using the cache memory 60a unless the number of times updating has been performed exceeds a predetermined value. At a proper point of time, the SRRI updated using the cache memory is recorded as a TDMS updating unit on the disk 1.

Updating using the cache memory may also be performed as follows. During an operation until a command is issued to eject the disk 1 from the disk drive, updating of the TDFL/SRRI is performed using the cache memory 60a, and updated (newest) TDFL/SRRI stored in the cache memory 60a is recorded into the TDMA of the disk 1 when the disk 1 is ejected.

For example, a personal computer is used as the host apparatus 120. In this case, the host apparatus 120 may be constructed so as to include a CPU 101, an interface 102, an HDD 103, a ROM/RAM 104, and a user interface 105.

The interface 102 serves to transmit a command to the disk drive 10 and receive recorded/reproduced data from the disk drive 10.

The HDD (hard disk drive) 103 is used to store AV data and/or an application program.

The ROM/RAM 104 is used to store a program executed by the CPU 101 and is also used as a work area by the CPU 101.

The user interface 105 is a part or an apparatus for presenting data to a user or for capturing data input by a user, such as a monitor display for displaying an image/character, an audio output device such as a speaker, and an input device such as a keyboard or a switch.

In accordance with the application program executed on the CPU 101, the host apparatus 120 performs an operation in which the disk drive 10 is used as a storage device for storing AV data.

In practice, the host apparatus 120 is not limited to the personal computer, but other various types devices such as a video camera, an audio system and an AV editor device may be used as the host apparatus 120.

### 5. Replacement Process to Handle Defect

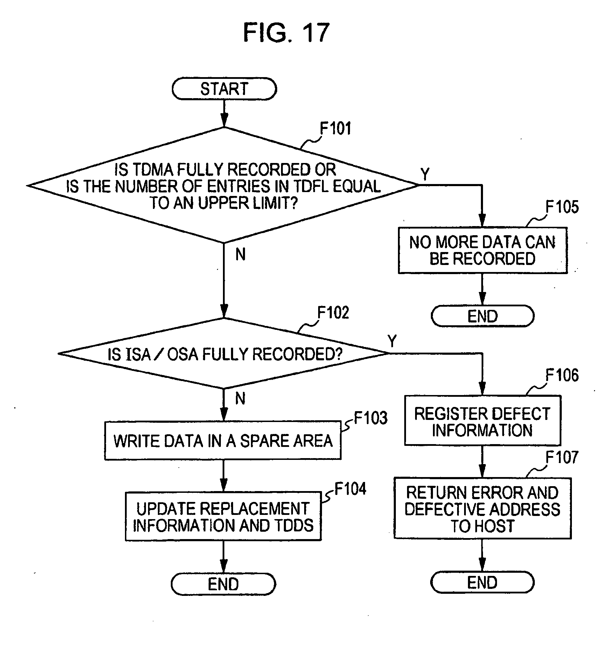

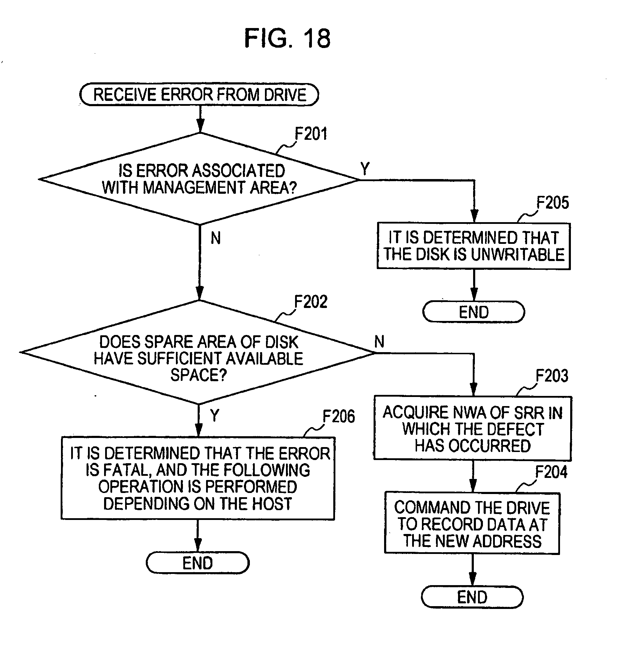

The replacement process performed by the recording system to handle a defective cluster in accordance with the present embodiment of the invention is described below with reference to Figs. 17 and 18.

Fig. 17 shows a process performed by the system controller 60 in a situation in which a cluster at an address of the disk 1 is defective when the disk drive 10 tries to write data at that address of the disk 1 in accordance with a data write command issued by the host apparatus 120.

Note that in the present operation of writing data in response to a request issued by the host apparatus 120, it is assumed that the disk 1 has already been mounted on the disk drive 10, and the TDDS, the TDFL, and/or the SRRI recorded in the TDMA of the disk 1 mounted on the disk drive 10 have been read into the cache memory 60a.

In usual cases, when the host apparatus 120 issues a write request or a read request, an address at which to write/read the data is specified by a logical sector address (LSN). The disk drive 10 converts the specified logical sector address to a physical sector address (PSN) and performs writing or reading at the resultant physical sector address.

The conversion of the logical sector address specified by the host device 120 into the physical sector address can be performed by adding the first physical sector address of the user data area described in the TDDS to the specified logical sector address.

Writing of data is performed in units of clusters.

When the system controller 60 tries to write data in accordance with a command to write data at an address N (represented in logical sector address (N is a multiple of 32)) issued by the host apparatus such as an AV system 120, if an error occurs in the operation of writing data at that address (because a cluster at that address is found to be defective), then in step F101 the system controller 60 checks the TDDS and the TDFL to determine the size of the defect list (TDFL) and determine whether the TDMA has a sufficient available recording area.

When the TDMA does not have a sufficient available recording area (and the ATDMA also does not have a sufficient available recording area when the ATDMA exists) or when the number of entries in the TDFL has reached the maximum allowable value and thus no further DFL entry can be added, the system controller 60 advances the process to step F105. In step F105, an error indicating that recording is impossible is returned to the host apparatus 120, and the process is ended.

On the other hand, if the TDMA (or the ATDMA) has a sufficient available space in which an additional DFL entry can be recorded, the process proceeds to step F102. In step F102, a determination is made as to whether the ISA or the OSA used as the spare area has a sufficient available area.

If the spare area has a sufficient available area, the process proceeds to step F103. In step F103, a normal replacement process is performed such that the data is recorded not in the defective cluster but in a cluster in the ISA or the OSA used as the spare area.

Thereafter, the replacement management information is updated such that the replacement process performed is reflected in the replacement management information. That is, a new DFL entry is added to the TDFL.

To produce the DFL entry, it is needed to convert the logical sector address N specified by the host apparatus 120 into a logical sector address N'. This is accomplished by adding the first physical address of the user data area described in the TDDS to the logical sector address N specified by the host apparatus 120. The physical sector address N' determined in the above-described manner is described as the original sector address in the DFL entry.

Furthermore, the physical sector address of the sector in the ISA or the OSA in which the data was recorded is described as the replacement sector address in the DFL entry in accordance with the format shown in Fig. 10A, thereby reconstructing the TDFL.

The TDDS is then updated such that the TDFL updated in the above-described manner is managed as the newest TDFL. Note that the process described above is performed when the TDMS updating unit described earlier with reference to Figs. 5, 6, and 7 is recorded.

In the case in which it is determined in step F102 that the spare area does not have a sufficient available area, the system controller 60 advances the process to step F106 to update the replacement management information. In this case, when the cluster at which the writing error has occurred is registered in the DFL entry, the status 1 and the status 2 are respectively described as "0001" and "0000" in the DFL entry as described earlier with reference to Fig. 10B. That is, in this DFL entry, the address specified by the host apparatus 120 is described as the original cluster address and the zero data is described as the replacement cluster address, and the resultant DFL entry is added to the TDFL. In this case, the DFL entry indicates that the detected defective cluster has not been replaced.

When data writing is performed in the sequential recording mode, the host apparatus 120 specifies an NWA (Next Writable Address) of an SRR as a write address. However, if the specified NWA is a defective cluster address, the NWA is replaced with the address of a cluster next to the defective cluster. Specifically, this is accomplished by updating the LRA (Last Recorded Address) in the SRRI.

The TDDS is then updated such that the updated TDFL and SRRI are reflected (by recording the TDMS update unit).

In this way, the defective cluster is registered in the replacement management information. However, in this specific case, because the ISA and the OSA do not have sufficient available area, the replacement is not performed.

In step F107, an error is returned in order to inform the host apparatus of the address of the defective cluster, and the process is ended.

In the disk drive 10, when a defective cluster is detected in a data writing process, if a new DFL entry cannot be registered because the TDMA (ATDMA) has no more available area, an error indicating that recording is impossible is returned to the host apparatus 120.

When registration of a new DFL entry is possible and the spare area has a sufficient available space, the replacement is performed and the new DFL entry is registered to mange the replacement.

When the spare area does not have a sufficient available space although registration of a new DFL entry is possible, the DFL entry indicating the defective cluster is registered, but the replacement is not performed. In this case, data indicating the address of the defective cluster is transmitted to the host apparatus 120 in order to request the host apparatus 120 to determine how to handle the error.

Depending on the process performed in the disk drive 10, the host apparatus 120 receives an error message in step F105 or F107.

If the host apparatus 120 receives such an error message, the host apparatus 120 (CPU 101) performs a process as shown in Fig. 18.

In a case in which the host apparatus 120 (CPU 101) receives an error message from the disk drive 10 whose defective cluster replacement function works correctly, the host apparatus 120 determines the type of the error. That is, in step F201, a determination is made as to whether the error is associated with the spare area, that is, as to whether the error is issued in step F105 because updating of the TDMA (ATDMA) is impossible.

If the error is associated with the management area, no more data can be recorded on the disk 1, and thus the process proceeds to step F205 in which it is determined that the disk is unwritable, and no more write command is issued thereafter.

In the case in which when the disk drive 10 tries to perform the replacement process to handle a write error, the spare area does not have a sufficient available space and thus the error is returned to the host apparatus 120 in step S107, the CPU 101 advances the process to step F202.

In step F202, the CPU 101 issues a command to the system controller 60 to determine whether the spare area (the ISA or the OSA) of the disk 1 has a sufficient available space.

If a message saying that the spare area has a sufficient available space is returned, the situation is abnormal. When the spare area has a sufficient available space, an error other than those shown in Fig. 17 can occur. For example, if the replacement into the spare area fails a predetermined or greater number of times, such an error can occur. When such an error occurs, a process is performed depending on the host apparatus (application) (F206).

In a normal situation, a write error which is not associated with the management area is issued in step F107 shown in Fig. 17. In the case in which the CPU 101 determines in step F202 that the spare area does not have a sufficient available space, the CPU 101 determines that the error is that which has been issued in step F107, and the CPU 101 advances the process to step F203 to handle the error.

When the spare area of the disk 1 does not have a sufficient available space, and the replacement process is not performed, the CPU 101 determines that the defective cluster replacement process is disabled by the system controller 60, and the CPU 101 of the host apparatus 120 specifies a new write address at which the data should be written.

In this case, in step F203, the CPU 101 acquires a new NWA of the SRR in which the defect has occurred from the system controller 60. Note that this NWA has been updated by the system controller 60 in step F106.

In step F204, the CPU 101 transmits, to the system controller 60, a command to write the data at the address indicated by the NWA.

In response to the command, the system controller 60 controls the operation so as to write the data at the specified address.

In the case of the sequential recording mode, instead of specifying the NWA newly set in the SRR in which the defective cluster has been detected (in this case, data is recorded in clusters other than the detected defective cluster), the NWA of another SRR in the open status may be specified. In any case, if the host apparatus 120 correctly manages the NWAs, no problem occurs in the compatibility in terms of writing and reading, regardless of which SRR is selected. That is, even when the control of the replacement process is transferred to the host apparatus in the middle of the process performed in the disk drive 10 because of the lack of sufficient available space in the spare area, the compatibility of the disk 1 in terms of reading is achieved if the host apparatus 120 correctly manages the new writing address.

The TDMS updating unit including the TDDS, TDFL, and SRRI updated by the disk drive 10 is recorded in the TDMA (or the ATDMA) on the disk 1 immediately after the data is recorded.

In the process described above, the message issued in step F107 is assumed to be an error message, this message does not necessarily need to be an error message. For example, a message indicating that a cluster at an address specified for writing of data is defective may be transmitted to the host apparatus 120, and the host apparatus 120 may determine how to handle the defect.

### 6. Advantages of Embodiments

As can be seen from the above discussion, embodiments of the present invention provide great advantages. That is, in the disk drive 10 having the capability of performing defective cluster replacement, the defective cluster replacement is enabled at the start of a recording operation so that describing of the defective cluster replacement information (TDFL) and replacement into the spare area (the ISA or the OSA) are allowed. However, if the available space in the spare area becomes insufficient or if the spare area has no more available space, only the defective cluster replacement information is recorded but the replacement into the spare area is not performed. In this case, a message indicating that a cluster at a specified address is defective is transmitted to the host apparatus 120.

During the recording process performed by the host apparatus 120, if the host apparatus 120 receives the error message or the like indicating that the cluster at the specified write address on the disk 1, on which the defective cluster replacement is enabled, is defective, the host apparatus 120 checks the available space in the spare area on the disk 1. If the spare area does not have a sufficient available space (in this case, it is determined that the defective cluster replacement has been disabled), the host apparatus 120 selects another proper address and issues a command to write the data, which has failed to be written, at the selected address.

The proper address described above may be selected as follows. In the case of the write once disk (in the sequential recording mode), when an error occurs, the NWA of a proper another SRR is acquired from the disk drive 10, and the host apparatus 120 issues a command to write the data starting from this NWA. By extending the recording process performed by the disk drive 10 and the host apparatus 120 in the above-described manner, it becomes possible to record data without being restricted by the available space in the spare area. When the available space in the spare area becomes insufficient, the hardware defect replacement process by the disk drive 10 is disabled, and the control of the recording area is transferred to the host apparatus 120. Thus, when the disk 1 subjected to the replacement process according to the embodiment of the invention is mounted on a usual write/read device, it is possible to read data from the disk 1 in an usual manner without encountering any problem. That is, it is possible to eliminate the restriction by the insufficiency of the available space in the spare area while maintaining the compatibility in terms of reading.

This makes it unnecessary to set a large size for the ISA and the OSA, and it becomes possible to record data by efficiently using the user data area.

This method can be applied not only to the management of defects on the next-generation optical disk called Blue-ray Disk employed in the embodiments described above, but to the logical overwrite process (the rewriting process using cluster replacement on the write once medium).

The method can also be applied to the defective cluster replacement process performed by a system in which data is recorded on Blue-ray Disk in a write once fashion without performing logical overwriting.

The available spare in the spare area can become insufficient not only in the write once medium but also in a rewritable medium. The process according to the embodiment of the invention may also be applied to such a rewritable medium.

It should be understood by those skilled in the art that various modifications, combinations, sub-combinations and alterations may occur depending on design requirements and other factors insofar as they are within the scope of the appended claims or the equivalents thereof.

## Claims

1. A method of a replacement process in a recording apparatus for recording data in accordance with a recording request issued by a host apparatus (120), on a recording medium (1) having a recording area capable of recording data,
the recording area including a main data area for recording and reading main data, a spare area (ISA, OSA) for use in the replacement process, and a management information area for recording replacement management information for managing the replacement process, the method comprising the steps of:
if an area to be replaced by the replacement process is detected on the recording medium (1), checking (F102, 60) an available space in the spare area (ISA, OSA);
if it is determined in the checking step (F102) that the spare area (ISA, OSA) has a sufficient available space, performing (F103) the replacement process on the area to be replaced using the spare area (ISA, OSA), and updating (F104) the replacement management information recorded in the management information area such that the replacement is reflected in the replacement management information; and
if it is determined in the checking step (F102) that the spare area (ISA, OSA) does not have a sufficient available space, updating (F106) the replacement management information recorded in the management information area without performing the replacement process on the area to be replaced using the spare area (ISA, OSA) such that the area to be replaced is managed by the updated replacement management information, and transmitting (F107) information to the host apparatus (120) to request the host apparatus (120) to perform a process (F201..F206) associated with the area to be replaced,
**characterized in**
**that** the process (F201..F206) performed by the host apparatus (120) comprises the steps of:
acquiring (F203) a next writable address (NWA) of a sequential recording range (SRR) in which the area to be replaced is located or a next writable address (NWA) of another sequential recording range (SRR) in an open status in which recording of additional data is allowed; and
issuing (F204) a data writing command to write data at said next writable address (NWA).

2. The method of the replacement process according to Claim 1, wherein
the area to be replaced is an area which is to be replaced because the area includes a defect on the recording medium (1).

3. The method of the replacement process according to Claim 1 or 2, wherein
the recording medium (1) is initialized into a state that allows it to perform the replacement process using the spare area.

4. The method of the replacement process according to Claim 1, 2 or 3, wherein
the recording medium (1) is a write once recording medium or a rewritable recording medium.

5. The method of the replacement process according to anyone of Claims 1 to 4, wherein
the recording medium (1) comprises a first spare area (ISA) and a second spare area (OSA), and
said information is transmitted to the host apparatus (120) at the transmitting step (F107), if it is determined in the checking step (F102) that none of said first spare area (ISA) and said second spare area (OSA) has a sufficient available space.

6. The method of the replacement process according to anyone of Claims 1 to 5, wherein
writing of data on the recording medium (1) is performed in units of clusters in a sequential recording mode; and
said next writable address (NWA) indicates a cluster next to a defective cluster.

7. A recording system comprising:
a recording apparatus (10) for recording data on a recording medium (1) having a recording area capable of recording data, the recording area including a main data area for recording and reading main data, a spare area (ISA, OSA) for use in the replacement process, and a management information area for recording replacement management information for managing the replacement process; and
a host apparatus (120) adapted to request the recording apparatus (10) to record data on the recording medium (1),
- the recording apparatus (10) including
a writing unit (51..53) configured to write data on the recording medium (1),
a write control unit (60) configured to control the writing unit (51..53) to write data on the recording medium (1) when a data write command is issued by the host apparatus (120),
a checking unit (60) configured to check (F102), if an area to be replaced by the replacement process is detected on the recording medium (1) during a data writing operation performed by the writing unit (51..53), an available space in the spare area (ISA, OSA), and
a replacement processing unit (60) configured to perform a first process (F103, F104) if the checking unit (60) determines that the spare area (ISA, OSA) has a sufficient available space but perform a second process (F106, F107) if the checking unit (60) determines that the spare area (ISA, OSA) does not have a sufficient available space, the first process (F103, F104) involving performing the replacement process (F103) on the area to be replaced using the spare area (ISA, OSA) and updating (F104) the replacement management information recorded in the management information area such that the replacement is reflected in the replacement management information, the second process involving updating (F107) the replacement management information recorded in the management information area without performing the replacement process on the area to be replaced using the spare area (ISA, OSA) such that the area to be replaced is managed by the updated replacement management information, and transmitting (F107) information to the host apparatus (120) to request the host apparatus (120) to perform a process (F201..F206) associated with the area to be replaced,
**characterized in**
**that** the host apparatus (120) comprises a control unit (101) adapted to acquire (F203), if said information is received by the host apparatus (120), a next writable address (NWA) of a sequential recording range (SRR) in which the area to be replaced is located or a next writable address (NWA) of another sequential recording range (SRR) in an open status in which recording of additional data is allowed, and to issue (F204) a data writing command to write data at said next writable address (NWA).

8. The recording system according to Claim 7, wherein
the recording apparatus (10) is adapted to determine an area that includes a defect on the recording medium (1) as said area to be replaced.

9. The recording system according to Claim 7 or 8, wherein
the replacement processing unit (60) is adapted to perform the first or second process on a recording medium (1) initialized into a state that allows it to perform the replacement process using the spare area (ISA, OSA).

10. The recording system according to Claim 7, 8, or 9, wherein
the recording apparatus (10) is adapted to record data on a write once recording medium or a rewritable recording medium.

11. The recording system according to anyone of Claims 7 to 10, wherein
the recording medium (1) comprises a first spare area (ISA) and a second spare area (OSA), and
the replacement processing unit (60) is adapted to transmit said information to the host apparatus (120), if the checking unit (60) determines that none of said first spare area (ISA) and said second spare area (OSA) has a sufficient available space.

12. The recording system according to anyone of Claims 7 to 11, wherein
the recording apparatus (10) is adapted to perform writing of data on the recording medium (1) in units of clusters in a sequential recording mode; and
said next writable address (NWA) indicates a cluster next to a defective cluster.

## Patentansprüche

1. Verfahren eines Ersetzungsprozesses in einer Aufzeichnungsvorrichtung zur Aufzeichnung von Daten gemäß einer Aufzeichnungsanforderung, die durch eine Hostvorrichtung (120) ausgegeben wird, auf ein Aufzeichnungsmedium (1), das einen Aufzeichnungsbereich aufweist, der zur Aufzeichnung von Daten imstande ist,
wobei der Aufzeichnungsbereich einen Hauptdatenbereich zum Aufzeichnen und Lesen von Hauptdaten, einen Reservebereich (ISA, OSA) zur Verwendung im Ersetzungsprozess und einen Verwaltungsinformationsbereich zur Aufzeichnung von Ersetzungsverwaltungsinformationen zur Verwaltung des Ersetzungsprozesses aufweist; wobei das Verfahren die folgenden Schritte aufweist:
wenn ein Bereich, der durch den Ersetzungsprozess ersetzt werden soll, auf dem Aufzeichnungsmedium (1) ermittelt wird, Überprüfen (F102, 60) eines verfügbaren Platzes im Reservebereich (ISA, OSA);
wenn im Überprüfungsschritt (F102) festgestellt wird, dass der Reservebereich (ISA, OSA) einen ausreichenden verfügbaren Platz aufweist, Durchführen (F103) des Ersetzungsprozesses am Bereich, der mittels des Reservebereichs (ISA, OSA) ersetzt werden soll, und Aktualisieren (F104) der im Verwaltungsinformationsbereich aufgezeichneten Ersetzungsverwaltungsinformationen, so dass sich die Ersetzung in den Ersetzungsverwaltungsinformationen widerspiegelt; und
wenn im Überprüfungsschritt (F102) festgestellt wird, dass der Reservebereich (ISA, OSA) keinen ausreichenden verfügbaren Platz aufweist, Aktualisieren (F106) der im Verwaltungsinformationsbereich aufgezeichneten Ersetzungsverwaltungsinformationen ohne Durchführen des Ersetzungsprozesses am Bereich, der mittels des Reservebereichs (ISA, OSA) ersetzt werden soll, so dass der Bereich, der ersetzt werden soll, durch die aktualisierten Ersetzungsverwaltungsinformationen verwaltet wird, und Senden (F107) von Informationen an die Hostvorrichtung (120), um die Hostvorrichtung (120) aufzufordern, einen Prozess (F201 ... F206) auszuführen, der mit dem Bereich assoziiert ist, der ersetzt werden soll,
**dadurch gekennzeichnet, dass**
der durch die Hostvorrichtung (120) ausgeführte Prozess (F201 ... F206) die folgenden Schritte aufweist:
Erfassen (F203) einer nächsten beschreibbaren Adresse (NWA) eines fortlaufenden Aufzeichnungsbereichs (SRR), in dem sich der Bereich befindet, der ersetzt werden soll, oder einer nächsten beschreibbaren Adresse (NWA) eines anderen fortlaufenden Aufzeichnungsbereichs (SRR) in einem offenen Zustand, in dem eine Aufzeichnung von zusätzlichen Daten zulässig ist; und
Ausgeben (F204) eines Datenschreibbefehls, Daten an die nächste beschreibbare Adresse (NWA) zu schreiben.

2. Verfahren des Ersetzungsprozesses nach Anspruch 1, wobei
der Bereich, der ersetzt werden soll, ein Bereich ist, der ersetzt werden soll, weil der Bereich einen Defekt auf dem Aufzeichnungsmedium (1) enthält.

3. Verfahren des Ersetzungsprozesses nach Anspruch 1 oder 2, wobei
das Aufzeichnungsmedium (1) zu einem Zustand initialisiert wird, der es ihm ermöglicht, den Ersetzungsprozess mittels des Reservebereichs auszuführen.

4. Verfahren des Ersetzungsprozesses nach Anspruch 1, 2 oder 3, wobei
das Aufzeichnungsmedium (1) ein einmal beschreibbares Aufzeichnungsmedium oder ein wieder beschreibbares Aufzeichnungsmedium ist.

5. Verfahren des Ersetzungsprozesses nach einem der Ansprüche 1 bis 4, wobei
das Aufzeichnungsmedium (1) einen ersten Reservebereich (ISA) und einen zweiten Reservebereich (OSA) aufweist, und
die Informationen an die Hostvorrichtung (120) beim Sendeschritt (F107) gesendet werden, wenn im Überprüfungsschritt (F102) festgestellt wird, dass keiner des ersten Reservebereichs (ISA) und des zweiten Reservebereichs (OSA) einen ausreichenden verfügbaren Platz aufweist.

6. Verfahren des Ersetzungsprozesses nach einem der Ansprüche 1 bis 5, wobei
das Schreiben von Daten auf das Aufzeichnungsmedium (1) in Einheiten von Clustern in einer fortlaufenden Aufzeichnungsweise ausgeführt wird; und
die nächste beschreibbare Adresse (NWA) einen Cluster anzeigt, der einem defekten Cluster am nächsten ist.

7. Aufzeichnungssystem mit:
einer Aufzeichnungsvorrichtung (10) zur Aufzeichnung von Daten auf ein Aufzeichnungsmedium (1), das einen Aufzeichnungsbereich aufweist, der zur Aufzeichnung von Daten imstande ist, wobei der Aufzeichnungsbereich einen Hauptdatenbereich zum Aufzeichnen und Lesen von Hauptdaten, einen Reservebereich (ISA, OSA) zur Verwendung im Ersetzungsprozess und einen Verwaltungsinformationsbereich zur Aufzeichnung von Ersetzungsverwaltungsinformationen zur Verwaltung des Ersetzungsprozesses aufweist; und
einer Hostvorrichtung (120), die eingerichtet ist, die Aufzeichnungsvorrichtung (10) aufzufordern, Daten auf das Aufzeichnungsmedium (1) aufzuzeichnen,
- wobei die Aufzeichnungsvorrichtung (10) Folgendes aufweist:
eine Schreibeinheit (51..53), die konfiguriert ist, Daten auf das Aufzeichnungsmedium (1) zu schreiben,
eine Schreibsteuereinheit (60), die konfiguriert ist, die Schreibeinheit (51..53) zu steuern, Daten auf das Aufzeichnungsmedium (1) zu schreiben, wenn ein Datenschreibbefehl durch die Hostvorrichtung (120) ausgegeben wird,
eine Überprüfungseinheit (60), die konfiguriert ist, wenn ein Bereich, der durch den Ersetzungsprozess ersetzt werden soll, auf dem Aufzeichnungsmedium (1) während einer Datenschreiboperation ermittelt wird, die durch die Schreibeinheit (51..53) ausgeführt wird, einen verfügbaren Platz im Reservebereich (ISA, OSA) zu überprüfen (F102), und
eine Ersetzungsverarbeitungseinheit (60), die konfiguriert ist, einen ersten Prozess (F103, F104) durchzuführen, wenn die Überprüfungseinheit (60) feststellt, dass der Reservebereich (ISA, OSA) einen ausreichenden verfügbaren Platz aufweist, jedoch einen zweiten Prozess (F106, F107) durchzuführen, wenn die Überprüfungseinheit (60) feststellt, dass der Reservebereich (ISA, OSA) keinen ausreichenden verfügbaren Platz aufweist, wobei der erste Prozess (F103, F104) das Durchführen des Ersetzungsprozesses (F103) am Bereich, der mittels des Reservebereichs (ISA, OSA) ersetzt werden soll, und das Aktualisieren (F104) der im Verwaltungsinformationsbereich aufgezeichneten Ersetzungsverwaltungsinformationen umfasst, so dass sich die Ersetzung in den Ersetzungsverwaltungsinformationen widerspiegelt, wobei der zweite Prozess das Aktualisieren (F107) der im Verwaltungsinformationsbereich aufgezeichneten Ersetzungsverwaltungsinformationen ohne Durchführen des Ersetzungsprozesses am Bereich, der mittels des Reservebereichs (ISA, OSA) ersetzt werden soll, so dass der Bereich, der ersetzt werden soll, durch die aktualisierten Ersetzungsverwaltungsinformationen verwaltet wird, und das Senden (F107) von Informationen an die Hostvorrichtung (120) umfasst, um die Hostvorrichtung (120) aufzufordern, einen Prozess (F201..F206) durchzuführen, der mit dem Bereich assoziiert ist, der ersetzt werden soll,
**dadurch gekennzeichnet, dass**
die Hostvorrichtung (120) eine Steuereinheit (101) aufweist, die eingerichtet ist, wenn die Informationen durch die Hostvorrichtung (120) empfangen werden, eine nächste beschreibbare Adresse (NWA) eines fortlaufenden Aufzeichnungsbereichs (SRR), in dem sich der Bereich befindet, der ersetzt werden soll, oder eine nächste beschreibbare Adresse (NWA) eines anderen fortlaufenden Aufzeichnungsbereichs (SRR) in einem offenen Zustand zu erfassen (F203), in dem eine Aufzeichnung von zusätzlichen Daten zulässig ist, und einen Datenschreibbefehl auszugeben (F204), Daten an die nächste beschreibbare Adresse (NWA) zu schreiben.

8. Aufzeichnungssystem nach Anspruch 7, wobei
die Aufzeichnungsvorrichtung (10) eingerichtet ist, einen Bereich, der einen Defekt aufweist, auf dem Aufzeichnungsmedium (1) als den Bereich festzulegen, der ersetzt werden soll.

9. Aufzeichnungssystem nach Anspruch 7 oder 8, wobei
die Ersetzungsverarbeitungseinheit (60) eingerichtet ist, den ersten oder zweiten Prozess auf einem Aufzeichnungsmedium (1) durchzuführen, das zu einem Zustand initialisiert ist, der es ihm ermöglicht, den Ersetzungsprozess mittels des Reservebereichs (ISA, OSA) auszuführen.

10. Aufzeichnungssystem nach Anspruch 7, 8 oder 9, wobei
die Aufzeichnungsvorrichtung (10) eingerichtet ist, Daten auf ein einmal beschreibbares Aufzeichnungsmedium oder ein wieder beschreibbares Aufzeichnungsmedium aufzuzeichnen.

11. Aufzeichnungssystem nach einem der Ansprüche 7 bis 10, wobei
das Aufzeichnungsmedium (1) einen ersten Reservebereich (ISA) und einen zweiten Reservebereich (OSA) aufweist, und
die Ersetzungsverarbeitungseinheit (60) eingerichtet ist, die Informationen an die Hostvorrichtung (120) zu senden, wenn die Überprüfungseinheit (60) feststellt, dass keiner des ersten Reservebereichs (ISA) und des zweiten Reservebereichs (OSA) einen ausreichenden verfügbaren Platz aufweist.

12. Aufzeichnungssystem nach einem der Ansprüche 7 bis 11, wobei
die Aufzeichnungsvorrichtung (10) eingerichtet ist, das Schreiben von Daten auf das Aufzeichnungsmedium (1) in Einheiten von Clustern in einer fortlaufenden Aufzeichnungsweise durchzuführen; und
die nächste beschreibbare Adresse (NWA) einen Cluster anzeigt, der einem defekten Cluster am nächsten ist.

## Revendications

1. Procédé d'un processus de remplacement dans un appareil d'enregistrement pour enregistrer des données conformément à une requête d'enregistrement émise par un appareil hôte (120), sur un support d'enregistrement (1) ayant une zone d'enregistrement capable d'enregistrer des données,
la zone d'enregistrement comportant une zone de données principale pour enregistrer et lire des données principales, une zone de réserve (ISA, OSA) destinée à être utilisée dans le processus de remplacement, et une zone d'informations de gestion pour enregistrer des informations de gestion de remplacement pour gérer le processus de remplacement, le procédé comprenant les étapes consistant à :
si une zone devant être remplacée par le processus de remplacement est détectée sur le support d'enregistrement (1), vérifier (F102, 60) un espace disponible dans la zone de réserve (ISA, OSA) ;
s'il est déterminé à l'étape de vérification (F102) que la zone de réserve (ISA, OSA) a un espace disponible suffisant, exécuter (F103) le processus de remplacement sur la zone à remplacer en utilisant la zone de réserve (ISA, OSA), et actualiser (F104) les informations de gestion de remplacement enregistrées dans la zone d'informations de gestion de telle sorte que le remplacement soit reflété dans les informations de gestion de remplacement ; et
s'il est déterminé à l'étape de vérification (F102) que la zone de réserve (ISA, OSA) a un espace disponible insuffisant, actualiser (F106) les informations de gestion de remplacement enregistrées dans la zone d'informations de gestion sans exécuter le processus de remplacement sur la zone à remplacer en utilisant la zone de réserve (ISA, OSA) de telle sorte que la zone à remplacer soit gérée par les informations de gestion de remplacement actualisées,
et
transmettre (F107) des informations à l'appareil hôte (120) pour demander à l'appareil hôte (120) d'exécuter un processus (F201 ... F206) associé à la zone à remplacer,
**caractérisé en ce que**
le processus (F201 ... F206) exécuté par l'appareil hôte (120) comprend les étapes consistant à :
acquérir (F203) une prochaine adresse inscriptible (NWA) d'une plage d'enregistrement séquentielle (SRR) dans laquelle est située la zone à remplacer ou une prochaine adresse inscriptible suivante (NWA) d'une autre plage d'enregistrement séquentielle (SRR) dans un état ouvert dans laquelle l'enregistrement de données supplémentaires est autorisé ; et
émettre (F204) une commande d'écriture de données pour écrire des données à ladite prochaine adresse inscriptible (NWA).

2. Procédé du processus de remplacement selon la revendication 1, dans lequel
la zone à remplacer est une zone qui doit être remplacée car elle comporte un défaut sur le support d'enregistrement (1).

3. Procédé du processus de remplacement selon la revendication 1 ou 2, dans lequel
le support d'enregistrement (1) est initialisé dans un état qui lui permet d'exécuter le processus de remplacement en utilisant la zone de réserve.

4. Procédé du processus de remplacement selon la revendication 1, 2 ou 3, dans lequel
le support d'enregistrement (1) est un support d'enregistrement inscriptible une fois ou un support d'enregistrement réinscriptible.

5. Procédé du processus de remplacement selon l'une quelconque des revendications 1 à 4, dans lequel
le support d'enregistrement (1) comprend une première zone de réserve (ISA) et une seconde zone de réserve (OSA), et
lesdites informations sont transmises à l'appareil hôte (120) à l'étape de transmission (F107), s'il est déterminé à l'étape de vérification (F102) qu'aucune de ladite première zone de réserve (ISA) et de ladite seconde zone de réserve (OSA) a un espace disponible suffisant.

6. Procédé du processus de remplacement selon l'une quelconque des revendications 1 à 5, dans lequel
l'écriture de données sur le support d'enregistrement (1) est exécutée en unités de grappes dans un mode d'enregistrement séquentiel ; et
ladite prochaine adresse inscriptible (NWA) indique une grappe proche d'une grappe défectueuse.

7. Système d'enregistrement comprenant :
un appareil d'enregistrement (10) pour enregistrer des données sur un support d'enregistrement (1) ayant une zone d'enregistrement capable d'enregistrer des données, la zone d'enregistrement comportant une zone de données principale pour enregistrer et lire des données principales, une zone de réserve (ISA, OSA) destinée à être utilisée dans le processus de remplacement, et une zone d'informations de gestion pour enregistrer des informations de gestion de remplacement pour gérer le processus de remplacement ; et
un appareil hôte (120) adapté pour demander à l'appareil d'enregistrement (10) d'enregistrer des données sur le support d'enregistrement (1) ;
- l'appareil d'enregistrement (10) comportant
une unité d'écriture (51 ... 53) configurée pour écrire des données sur le support d'enregistrement (1),
une unité de commande d'écriture (60) configurée pour commander à l'unité d'écriture (51 ... 53) d'écrire des données sur le support d'enregistrement (1) quand une commande d'écriture de données est émise par l'appareil hôte (120),
une unité de vérification (60) configurée pour vérifier (F102), si une zone devant être remplacée par le processus de remplacement est détectée sur le support d'enregistrement (1) durant une opération d'écriture de données exécutée par l'unité d'écriture (51 ... 53), un espace disponible dans la zone de réserve (ISA, OSA), et
une unité de traitement de remplacement (60) configurée pour exécuter un premier processus (F103, F104) si l'unité de vérification (60) détermine que la zone de réserve (ISA, OSA) a un espace disponible suffisant mais exécuter un second processus (F106, F107) si l'unité de vérification (60) détermine que la zone de réserve (ISA, OSA) a un espace disponible insuffisant, le premier processus (F103, F104) impliquant l'exécution du processus de remplacement (F103) sur la zone à remplacer en utilisant la zone de réserve (ISA, OSA) et l'actualisation (F104) des informations de gestion de remplacement enregistrées dans la zone d'informations de gestion de telle sorte que le remplacement soit reflété dans les informations de gestion de remplacement, le second processus impliquant l'actualisation (F107) des informations de gestion de remplacement enregistrées dans la zone d'informations de gestion sans exécuter le processus de remplacement sur la zone à remplacer en utilisant la zone de réserve (ISA, OSA) de telle sorte que la zone à remplacer soit gérée par les informations de gestion de remplacement actualisées,
et la transmission (F107) d'informations à l'appareil hôte (120) pour demander à l'appareil hôte (120) d'exécuter un processeur (F201 ... F206) associé à la zone à remplacer,
**caractérisé en ce que**
l'appareil hôte (120) comprend une unité de commande (101) adaptée pour acquérir (F203), si lesdites informations sont reçues par l'appareil hôte (120),
une prochaine adresse inscriptible (NWA) d'une plage d'enregistrement séquentielle (SRR) dans laquelle est située la zone à remplacer ou une prochaine adresse inscriptible suivante (NWA) d'une autre plage d'enregistrement séquentielle (SRR) dans un état ouvert dans laquelle l'enregistrement de données supplémentaires est autorisé, et émettre (F204) une commande d'écriture de données pour écrire des données à ladite prochaine adresse inscriptible (NWA).

8. Système d'enregistrement selon la revendication 7, dans lequel
l'appareil d'enregistrement (10) est adapté pour déterminer comme dite zone à remplacer une zone qui comporte un défaut sur le support d'enregistrement (1).

9. Système d'enregistrement selon la revendication 7 ou 8, dans lequel
l'unité de traitement de remplacement (60) est adaptée pour exécuter le premier ou second processus sur un support d'enregistrement (1) initialisé dans un état qui lui permet d'exécuter le processus de remplacement en utilisant la zone de réserve (ISA, OSA).

10. Système d'enregistrement selon la revendication 7, 8 ou 9, dans lequel
l'appareil d'enregistrement (10) est adapté pour enregistrer des données sur un support d'enregistrement inscriptible une fois ou un support d'enregistrement réinscriptible.

11. Système d'enregistrement selon l'une quelconque des revendications 7 à 10, dans lequel
le support d'enregistrement (1) comprend une première zone de réserve (ISA) et une seconde zone de réserve (OSA), et
l'unité de traitement de remplacement (60) est adaptée pour transmettre lesdites informations à l'appareil hôte (120), si l'unité de vérification (60) détermine qu'aucune de ladite première zone de réserve (ISA) et de ladite seconde zone de réserve (OSA) a un espace disponible suffisant.

12. Système d'enregistrement selon l'une quelconque des revendications 7 à 11, dans lequel
l'appareil d'enregistrement (10) est adapté pour exécuter une écriture de données sur le support d'enregistrement (1) en unités de grappes dans un mode d'enregistrement séquentiel ; et
ladite prochaine adresse inscriptible (NWA) indique une grappe proche d'une grappe défectueuse.
